# EUROPEAN PATENT APPLICATION

(11) **EP 4 495 867 A1**
(43) Date of publication of application: **22.01.2025**
(21) Application number: 24185578.2
(22) Date of filing: 30.06.2024
(51) Int. Cl.: G06Q 30/0601, G06F 3/01, G06F 3/0484, G06F 30/12, G06T 11/00

(54) **METHOD, COMPUTING DEVICE, NON-TRANSITORY COMPUTER-READABLE RECORDING MEDIUM, AND COMPUTER PROGRAM PRODUCT FOR CUSTOMIZING MERCHANDISE APPEARANCE**

(30) Priority: 19.07.2023 US 202363514566 P; 12.03.2024 TW 113109076
(71) Applicant: Evolutive Labs Co., Ltd., Taipei City 115023 (TW)
(72) Inventor: LAI, TZI-HUEI, 408 Taichung City (TW); CHANG, YA-HSUAN, 408 Taichung City (TW); YOU, XIN-YING, 408 Taichung City (TW); TSAI, WEN-YAO, 408 Taichung City (TW); WANG, JUN-QI, 408 Taichung City (TW); WU, CHI-EN, 408 Taichung City (TW); LIANG, YU-TING, 408 Taichung City (TW); LEI, YEONG-JYI, 408 Taichung City (TW)
(74) Representative: DTS Patent- und Rechtsanwälte PartmbB

(57) **Abstract**

A method for customizing an appearance of a merchandise which is suitable for being performed by a computing device (200) in order to customize a customized choice result selected by a user includes a designed image (410, 1310) and a merchandise information. The method includes receiving the designed image (410, 1310), receiving the merchandise information, overlappingly displaying the designed image (410, 1310) on a virtual merchandise image (420) corresponding to the merchandise information, receiving at least one edit operation for at least one designed element (415, 415') in the designed image (410, 1310), and editing for the designed element (415, 415') in the designed image (410, 1310) according to the edit operation and then generating a customized virtual image (440, 450). Thereby, the method can be used for customizing an appearance of a merchandise and directly customize the designed image (410, 1310) that has been arranged. In addition, a computing device (200), a non-transitory computer-readable recording medium, and a computer program product for customizing the appearance of the merchandise are also provided.

## Description

### BACKGROUND OF THE INVENTION

### 1. Field of the Invention

The present disclosure relates to a method, a computing device, a non-transitory computer-readable recording medium, and a computer program product, and in particular to a method, a computing device, a non-transitory computer-readable recording medium, and a computer program product for customizing an appearance of a merchandise.

### 2. Description of the Related Art

For the supply and demand market of many merchandise, most consumers do not only consider the functionality and practicality of the merchandise itself, but also consider the appearance and cost of the merchandise itself when purchasing the merchandise. In order to cater to the preferences of consumers, many manufacturers are also committed to the design of merchandise appearance to increase the purchase intention of consumers, and thus increase the sales and market share of merchandise.

Although many manufacturers are committed to the design of the appearance of merchandise, because of the consideration of manufacturing costs, the designer responsible for the design of merchandise appearance can only design the merchandise appearance for the merchandise that most consumers may have a high willingness to purchase, and then manufacture the product according to the designed merchandise appearance, which usually results in each manufacturer only being able to manufacture a few specific styles of merchandise for customers to purchase. In addition, because there are inevitable differences in preferences between designers and consumers, designers can only infer the appearance of the merchandise that most consumers may have a high willingness to purchase, which usually causes a gap between the merchandise provided by each manufacturer and the preferences of consumers, and then leads to the risk that the merchandise provided by each manufacturer are unsalable because they cannot meet the preferences of consumers.

Nowadays, some manufacturers are trying to provide consumers with the service for customized merchandise appearance, and then manufacture products according to the merchandise appearance that is preferred by consumers. More specifically, after the consumer has completed the design of the merchandise appearance through the operation of the customized service platform, the manufacturer will manufacture the product based on the merchandise appearance designed by the consumer, so as to provide the merchandise that can further meet the preferences of the consumer in appearance. For example, consumers can use the merchandise appearance customized service platform provided by KUSDOM to design the appearance of the merchandise, so as to produce a style of merchandise appearance that can further meet the preferences of the consumer in appearance, so that the manufacturer can manufacture the corresponding product.

However, the customized service content that can be provided by the merchandise appearance customized service platform in practice is quite limited. More specifically, after the merchandise that is expected to be customized is selected by the consumer, the consumer can only perform edit operations such as newly adding/deleting text, modifying the content/size/color/position of the text, newly adding/deleting images, modifying the size/position of the image on the blank virtual image corresponding to the merchandise, so that the consumer can customize the appearance of the merchandise from scratch through their own edit operations. Thus, after the consumer completes the design of the merchandise appearance by operating the customized service platform, the consumer can purchase the customized merchandise at a determined price.

### BRIEF SUMMARY OF THE INVENTION

Although some manufacturers provide customized service platforms regarding the appearance of the merchandise, enabling consumers to perform customized design for the appearance of the merchandise, the edit operations that consumers can actually carry out are quite limited. More specifically, whenever consumers want to perform customized design for the appearance of the merchandise, the consumer is required to perform customized design for the appearance of the merchandise from scratch, and cannot directly edit the designed image that has been arranged. That is to say, the consumer cannot apply the designed image to the virtual image corresponding to the merchandise expected to be customized, and cannot directly perform an edit operation for each designed element in the designed image on the virtual image.

As mentioned above, an objective of the present disclosure is to solve the deficiencies of the prior art. Specifically, one purpose of the present disclosure is to solve the problem that users operating the customized service platform cannot directly edit each designed element in the designed image that has been arranged on the virtual image corresponding to the merchandise expected to be customized.

In order to achieve these objectives and more, the present disclosure provides a method for customizing an appearance of a product or merchandise. The method is suitable for being performed by a computing device in order to customize a customized user choice, wherein the customized choice result includes a designed image and merchandise information. The method includes receiving the designed image, wherein the designed image includes at least one designed element; receiving the merchandise information; overlappingly displaying the designed image on a virtual merchandise image corresponding to the merchandise information; receiving at least one edit operation for the at least one designed element in the designed image; and editing the at least one designed element in the designed image according to the at least one edit operation, and then generating a customized virtual image.

In some embodiments, the customized choice result further includes merchandise change information, and the method further includes receiving the merchandise change information; and overlappingly displaying the designed image or the customized virtual image on a virtual merchandise change image corresponding to the merchandise change information after receiving the merchandise change information.

In some embodiments, the method further includes generating a customized amount according to a merchandise amount and a total element amount, and displaying the customized amount; and dynamically updating the merchandise amount after receiving the merchandise change information, and dynamically updating the customized amount as the merchandise amount changes. The merchandise amount is decided according to the merchandise information or the merchandise change information. The total element amount is decided according to the content of the customized virtual image.

In some embodiments, the method further includes transmitting the customized virtual image and merchandise change information to an image output device, wherein the customized virtual image is physically output on a physical object corresponding to the merchandise change information by the image output device.

In some embodiments, the method further includes generating a customized amount according to a merchandise amount and a total element amount, and displaying the customized amount. The merchandise amount is decided according to the merchandise information. The total element amount is decided according to the content of the customized virtual image.

In some embodiments, the method further includes dynamically updating the total element amount whenever the at least one edit operation is completed, and dynamically updating the customized amount as the total element amount changes.

In some embodiments, the customized choice result further includes a sticker image, and the step of editing the at least one designed element in the designed image according to the at least one edit operation includes receiving the sticker image, and using the sticker image as the at least one designed element to be added in the designed image.

In some embodiments, the method further includes judging whether a sticker group to which the sticker image belongs is a new group choice result whenever the sticker image is used as the at least one designed element to be added in the designed image; maintaining the total element amount and the customized amount when the sticker group is not the new group choice result; and dynamically updating the total element amount when the sticker group is the new group choice result, and dynamically updating the customized amount as the total element amount changes.

In some embodiments, the step of editing the at least one designed element in the designed image according to the at least one edit operation includes deleting a first element in the at least one designed element, and the method further includes judging whether the at least one designed element includes a second element whenever the first element is deleted; dynamically updating the total element amount when the at least one designed element fails to include the second element, and dynamically updating the customized amount as the total element amount changes; and maintaining the total element amount and the customized amount when the at least one designed element includes the second element. The second element is another designed element that is the same as a sticker group to which the first element belongs.

In some embodiments, the method further includes transmitting a customized virtual image and merchandise information to an image output device, wherein the customized virtual image is physically output on a physical object corresponding to the merchandise information by the image output device.

In some embodiments, the step of editing the at least one designed element in the designed image according to the at least one edit operation includes inputting the at least one designed element to an image transformation model, and performing image transformation for the at least one designed element by the image transformation model.

In some embodiments, the designed image is a combined image, and the number of the at least one designed element included in the combined image is plural.

In some embodiments, the method further includes inputting the customized virtual image into an image analysis model; analyzing the content of the customized virtual image by the image analysis model, and generating an image analysis result; and prompting a warning message when the image analysis result indicates that there is a copyright dispute in the content of the customized virtual image. The image analysis model is, for example, the Google Vision API.

Additionally, the present disclosure also provides a method for customizing an appearance of a merchandise. The method is suitable for being performed by a computing device in order to customize a customized choice result selected by a user, wherein the customized choice result includes at least one designed element and merchandise information. The method includes receiving the merchandise information, and displaying a virtual merchandise image corresponding to the merchandise information; receiving the at least one designed element, and overlappingly displaying the at least one designed element on the virtual merchandise image; receiving at least one edit operation performed for the at least one designed element; editing the at least one designed element according to the at least one edit operation, and generating a customized virtual image; generating a customized amount according to a merchandise amount and a total element amount, and displaying the customized amount; and dynamically updating the total element amount whenever the at least one edit operation is completed, and dynamically updating the customized amount as the total element amount changes. The merchandise amount is decided by the merchandise information. The total element amount is decided by the content of the customized virtual image.

In some embodiments, the step of dynamically updating the total element amount, and dynamically updating the customized amount as the total element amount changes includes judging whether a sticker group to which the sticker image belongs is a new group choice result whenever the at least one edit operation is adding a sticker image, and the sticker image is used as the at least one designed element; maintaining the total element amount and the customized amount when the sticker group is not the new group choice result; and dynamically updating the total element amount when the sticker group is the new group choice result, and dynamically updating the customized amount as the total element amount changes.

In some embodiments, the step of dynamically updating the total element amount, and dynamically updating the customized amount as the total element amount changes includes judging whether the at least one designed element includes a second element whenever the at least one edit operation is deleting a first element in the at least one designed element; dynamically updating the total element amount when the at least one designed element fails to include the second element, and dynamically updating the customized amount as the total element amount changes; and when the at least one designed element includes the second element, maintaining the total element amount and the customized amount. The second element is another designed element that is the same as a sticker group to which the first element belongs.

In some embodiments, the method further includes storing the customized virtual image in an image database, and the customized virtual image is set to be a designed image that can be edited.

In some embodiments, the customized choice result further includes merchandise change information, and the method further includes receiving the merchandise change information; and after receiving the merchandise change information, overlappingly displaying the customized virtual image on a virtual merchandise change image corresponding to the merchandise change information.

In some embodiments, the method further includes dynamically updating the merchandise amount after receiving the merchandise change information, and dynamically updating the customized amount as the merchandise amount changes.

In some embodiments, the method further includes transmitting a customized virtual image and merchandise change information to an image output device, wherein the customized virtual image is physically output on a physical object corresponding to the merchandise change information by the image output device.

In some embodiments, the method further includes transmitting a customized virtual image and merchandise information to an image output device, wherein the customized virtual image is physically output on a physical object corresponding to the merchandise information by the image output device.

In some embodiments, the step of editing at least one designed element according to at least one edit operation includes inputting at least one designed element to an image transformation model, and performing image transformation for at least one designed element by the image transformation model.

In some embodiments, the method further includes inputting the customized virtual image into an image analysis model; analyzing the content of the customized virtual image by the image analysis model, and generating an image analysis result; and prompting a warning message when the image analysis result indicates that there is a copyright dispute in the content of the customized virtual image. The image analysis model is, for example, the Google Vision API.

In order to achieve the above objectives and more, the present disclosure also provides a computing device for customizing the appearance of merchandise. The computing device includes a storage module and a processing module. The storage module is configured to store a computer program product. The processing module is configured to couple with the storage module. After the processing module loads and executes the computer program product, the processing module is capable of performing any of the methods for customizing the appearance of the merchandise described in the present disclosure.

In order to achieve the objectives above, the present disclosure also provides a non-transitory computer-readable recording medium for customizing the appearance of the merchandise, after a computing device loads a computer program product stored in the non-transitory computer-readable recording medium and executes the computer program product, the computing device is capable of performing any of the methods for customizing the appearance of the merchandise described in the present disclosure.

In order to achieve the above objectives, the present disclosure also provides a computer program product for customizing the appearance of merchandise, after the computing device loads a computer program product and executes the computer program product, the computing device is capable of performing any of the methods for customizing the appearance of the merchandise described in the present disclosure.

Thus, the technical means provided by the present disclosure can produce beneficial effects that cannot be achieved by the prior art. Specifically, one beneficial effect that can be achieved by the present disclosure is that the user who operates the customized service platform can directly perform an edit operation each designed element in the designed image that has been arranged on the virtual image corresponding to the merchandise expected to be customized, so that the user can more effectively use the customized service platform to complete the customization of the appearance of the merchandise.

### BRIEF DESCRIPTION OF THE DRAWINGS

FIG. 1 is a schematic block diagram illustrating a computing device for customizing an appearance of a merchandise in an embodiment of the present disclosure.
FIG. 2 is a schematic block diagram illustrating a processing module in an embodiment of the present disclosure.
FIG. 3 is a flowchart illustrating a method for customizing an appearance of a merchandise of an embodiment of the present disclosure.
FIG. 4A is a schematic view illustrating a designed image overlappingly displayed on the virtual merchandise image corresponding to the merchandise information according to an embodiment of the present disclosure.
FIG. 4B is a schematic view illustrating editing at least one designed element in the designed image according to at least one edit operation of an embodiment of the present disclosure.
FIG. 4C is a schematic view illustrating editing at least one designed element in the designed image according to at least one edit operation of an embodiment of the present disclosure.
FIG. 5A is a flowchart illustrating the method for customizing the appearance of the merchandise according to an embodiment of the present disclosure.
FIG. 5B is a flowchart illustrating the method for customizing the appearance of the merchandise according to an embodiment of the present disclosure.
FIG. 6 is a flowchart illustrating the method for customizing the appearance of the merchandise according to an embodiment of the present disclosure.
FIG. 7 is a schematic view illustrating the designed image or a customized virtual image overlappingly displayed on the virtual merchandise change image corresponding to the merchandise change information according to an embodiment of the present disclosure.
FIG. 8 is a flowchart illustrating the method for customizing the appearance of the merchandise according to an embodiment of the present disclosure.
FIG. 9 is a flowchart illustrating the method for customizing the appearance of the merchandise according to an embodiment of the present disclosure.
FIG. 10 is a flowchart illustrating the method for customizing the appearance of the merchandise according to an embodiment of the present disclosure.
FIG. 11 is a flowchart illustrating the method for customizing the appearance of the merchandise according to an embodiment of the present disclosure.
FIG. 12 is a flowchart illustrating the method for customizing the appearance of the merchandise according to an embodiment of the present disclosure.
FIG. 13 is a schematic view illustrating dynamically updating the total element amount and dynamically updating the customized amount with the change of the total element amount according to an embodiment of the present disclosure.
FIG. 14 is a flowchart illustrating the method for customizing the appearance of the merchandise according to an embodiment of the present disclosure.
FIG. 15 is a flowchart illustrating the method for customizing the appearance of the merchandise according to an embodiment of the present disclosure.
FIG. 16 is a flowchart illustrating the method for customizing the appearance of the merchandise according to an embodiment of the present disclosure.
FIG. 17 is a flowchart illustrating the method for customizing the appearance of the merchandise according to an embodiment of the present disclosure.
FIG. 18 is a flowchart illustrating the method for customizing the appearance of the merchandise according to an embodiment of the present disclosure.

### DETAILED DESCRIPTION OF THE INVENTION

The present disclosure will be described in detail by the following embodiments and the accompanying drawings, so as to assist a person having ordinary knowledge in the art to understand the object, features and effects of the present disclosure.

It should be noted that the steps described herein may be performed sequentially, in reverse order, or by appropriately changing or skipping the order during the control process. It should be noted that the phrase "the first step may be performed after the second step" described in the present disclosure can be expressed as "the first step is followed directly after the second step" and/or "the second step is followed by the other steps (e.g., the third step) and then the first step".

In addition, in the context of the present disclosure, it should be noted that terms such as "first", "second" and "third" are used to distinguish differences between elements, and not to limit the elements themselves or to represent a particular order of elements. It should be noted that the same element or step may be indicated by the same reference numeral in the following description.

In addition, the term "coupling" as described in the present disclosure may be represented as "directly connected" and/or "indirectly connected". Specifically, "the first element is configured to be coupled to the second element" can be expressed as "the first element is configured to be directly connected to the second element" and/or "the first element is configured to be indirectly connected to the second element".

For the sake of brevity, although the steps in the method for customizing the appearance of the merchandise described in the present disclosure are performed by means of a single computing device, in some embodiments, the steps may also be performed by means of a plurality of computing devices. In other words, the method described in the present disclosure for customizing the appearance of the merchandise may also be realized through the cooperative operation of the plurality of computing devices (e.g., computing devices and a remote server).

In some embodiments, a person having ordinary knowledge in the art to which the disclosure belongs may use a front-end framework such as a Vue.js and a back-end framework such as a Nest.js to establish an operating platform for customizing the appearance of the merchandise, so as to realize the method for customizing the appearance of the merchandise described in the present disclosure. In some embodiments, a person having ordinary knowledge in the art to which the disclosure belongs may use a database such as Postgresql to store specific data.

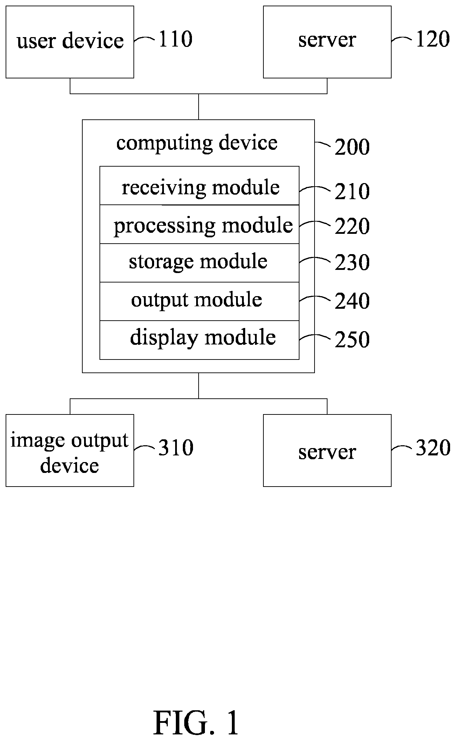

Referring to FIG. 1, FIG. 1 is a schematic block diagram illustrating a computing device 200 for customizing an appearance of a merchandise in an embodiment of the present disclosure. The computing device 200 may include a processing module 220 and a storage module 230, and the computing device 200 may be configured to be capable of customizing a customized choice result selected by a user. More specifically, after the computing device 200 performs the steps in the method described in the present disclosure for customizing the appearance of the merchandise, the computing device 200 is capable of editing at least one designed element in the designed image according to the edit operation received, so that the user can more effectively generate a customized virtual image.

In some embodiments, the computing device 200 for customizing the appearance of the merchandise may further include a receiving module 210 to receive an image provided by a user, so that the user can generate a more diverse customized virtual image. In some embodiments, the computing device 200 for customizing the appearance of the merchandise may further include an output module 240 to output a customized virtual image, merchandise information or merchandise change information, so that the recipient (e.g., the manufacturer of the merchandise) can physically output the customized virtual image on a physical object corresponding to the merchandise information or the merchandise change information. In some embodiments, the computing device 200 for customizing the appearance of the merchandise may further include a display module 250 to display designed images, designed elements, virtual merchandise images, virtual merchandise change images, customized virtual images, merchandise amounts, total element amounts and/or customized amounts, so that the user can more intuitively understand the visual effect of the images and more clearly grasp the amounts corresponding to the displayed images.

In some embodiments, the computing device 200 may be further configured to couple with a user device 110 and/or the server 120, in order to receive an image provided by the user from the user device 110 and/or the server 120. In some embodiments, the image provided by the user may be, but not limited to, a photographic file or an image file drawn by the user. In some embodiments, the computing device 200 may be coupled with the user device 110 and/or the server 120 through a physical signal line and/or a virtual signal line. In some embodiments, the physical signal line, for example, may be a network signal line conforming to the Internet protocol, but is not limited thereto. In some embodiments, the virtual signal line, for example, may be Wi-Fi, 4G/5G/6G, Bluetooth, short-range communication, which conforms to wireless communication protocols, but is not limited thereto. In some embodiments, the computing device 200 may also receive merchandise information, merchandise change information, virtual merchandise images, virtual merchandise change images, designed images, designed elements, merchandise amounts, amounts corresponding to designed images, amounts corresponding to designed elements, and so forth stored in a database in the server 120 from the server 120.

In some embodiments, the user device 110 may be a computing device capable of storing files, such as a smartphone, tablet, personal computer, but is not limited thereto. In some embodiments, the server 120 may be a computing device capable of storing files, and it may specifically be a physical host or a virtual cloud server, but is not limited thereto.

In some embodiments, the computing device 200 may be further configured to couple with an image output device 310 and/or the server 320, in order to transmit a customized virtual image, a customized amount, merchandise information or merchandise change information, etc., to the image output device 310 and/or the server 320. In some embodiments, the computing device 200 may be coupled with the image output device 310 and/or the server 320 through a physical signal line and/or a virtual signal line. In some embodiments, the physical signal line, for example, may be a network signal line conforming to the Internet protocol, but is not limited thereto. In some embodiments, the virtual signal line, for example, may be Wi-Fi, 4G/5G/6G, Bluetooth, short-range communication, which conforms to wireless communication protocols, but is not limited thereto.

In some embodiments, the image output device 310 may be an apparatus that can physically output a virtual image on a physical object, and it may be a printing apparatus applied in such as garment printing, automobile paint printing, mobile phone case printing or sticker printing, but is not limited thereto. In some embodiments, the server 320 may be a computing device capable of storing files, specifically a physical host or a virtual cloud server, but is not limited thereto.

The receiving module 210 may be configured to receive an image provided by the user from the user device 110 and/or the server 120. In some embodiments, the image provided by the user may be, but not limited to, a photographic file or an image file drawn by the user.

The processing module 220 may be configured to couple to the storage module 230 and may be configured to perform the steps of the method for customizing the appearance of the merchandise described in the present disclosure. More specifically, after loading and executing a computer program product, the processing module 220 is capable of performing the steps of the method for customizing the appearance of the merchandise described in the present disclosure, so as to realize any of the methods for customizing the appearance of the merchandise described in the present disclosure. In some embodiments, the processing module 220 may be further configured to couple with a receiving module 210, an output module 240 and/or a display module 250 to receive specific data (such as an image provided by a user), output specific data (such as a customized virtual image, a customized amount and merchandise information or merchandise change information), and/or display specific data (such as a designed image, a designed element, merchandise information, a merchandise virtual image, a customized virtual image and a customized amount). In some embodiments, the processing module 220 may be, but not limited to, a finished product known to a person having ordinarily knowledge in the art to which the disclosure belongs, such as various types of central processing units or graphics processors.

The storage module 230 may be configured to couple with the processing module 220 and may be configured to store a computer program product such that after the processing module 220 has loaded and executed the computer program product, the processing module 220 can perform the steps of the method for customizing the appearance of the merchandise described in the disclosure. The computer program product described in the present disclosure may include a series of codes and/or sets of instructions, in particular specific codes and/or sets of instructions for performing the steps of the method for customizing the appearance of the merchandise described in the disclosure.

In some embodiments, the storage module 230 may include one or more non-volatile memory and one or more volatile memory. In some embodiments, volatile memory may be a finished product known to a person having ordinarily knowledge in the art to which the present disclosure belongs, such as, but not limited to, various types of dynamic random access memory or static random access memory. In some embodiments, non-volatile memory may be a finished product known to a person having ordinarily knowledge in the art to which the present disclosure belongs, such as, but not limited to, various types of read-only memory or flash memory.

The output module 240 may be configured to couple with the processing module 220 and may be configured to transmit a customized virtual image, a customized amount, merchandise information or merchandise change information, etc., to the image output device 310 and/or the server 320.

The display module 250 may be configured to couple with the processing module 220 and may be configured to display data such as designed images, designed elements, merchandise information, merchandise change information, merchandise virtual images, merchandise change virtual images, merchandise amounts, total element amounts and/or customized amounts on the screen. In some embodiments, the display module 250 may be a finished product known to a person having ordinarily knowledge in the art to which the present disclosure belongs, such as various types of displays or display panels, but is not limited thereto.

Thus, any of the methods for customizing the appearance of the merchandise described in the present disclosure can be realized through a computing device 200 as shown in FIG. 1, in order to customize the customized choice result selected by the user, thereby generating a customized virtual image more effectively. In addition, the computing device 200 as shown in FIG. 1 can further generate a more diverse customized virtual image and/or physically output the customized virtual image on a physical object.

Additionally, the computing device 200 is capable of producing other beneficial effects when the computing device 200 realizes various methods for customizing the appearance of the merchandise. For example, the computing device 200 can dynamically update the customized amount as the content of the customized virtual image changes, so that the user can more clearly grasp the customized amount corresponding to the displayed result of the customized virtual image.

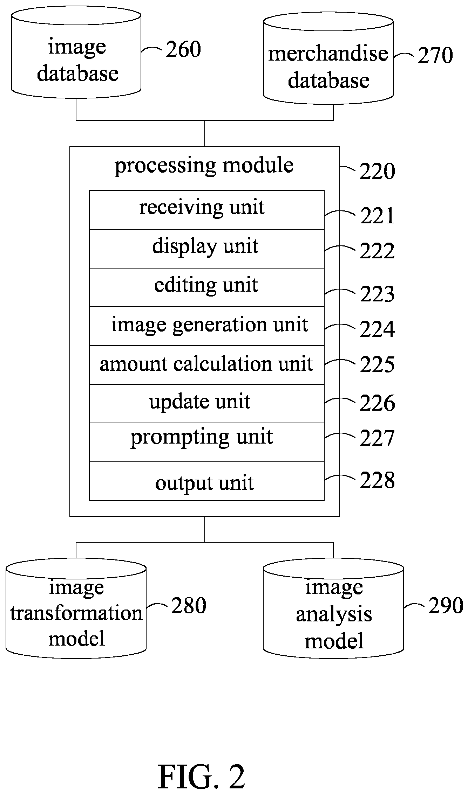

Referring to FIG. 2, FIG. 2 is a schematic block diagram illustrating a processing module 220 in an embodiment of the present disclosure. The processing module 220 may include a receiving unit 221, a display unit 222, an editing unit 223, and an image generation unit 224, and may be configured to be capable of customizing a customized choice result selected by a user. In some embodiments, the processing module 220 may further include an amount calculation unit 225, an update unit 226, a prompting unit 227, and/or an output unit 228.

The receiving unit 221 may be configured to be capable of receiving a customized choice result selected by a user. More specifically, the receiving unit 221 may receive the customized choice result such as merchandise information, merchandise change information, designed images and/or designed elements. In some embodiments, the receiving unit 221 may be further configured to receive an image (e.g., a photographic file) provided by the user. In addition, the receiving unit 221 may be further configured to receive requests such as starting editing, completing editing, and determining output, and to receive instructions associated with various edit operations.

The display unit 222 may be configured to display a virtual merchandise image, virtual merchandise change image, a designed image, a designed element and/or a customized virtual image. More specifically, the display unit 222 may overlappingly display the designed image, the designed element, or the customized virtual image on the virtual merchandise image or the virtual merchandise change image. In addition, the display unit 222 may also display each designed element on the virtual merchandise image or the virtual merchandise change image by overlapping each other through layer setting. For example, the display unit 222 may overlappingly display a first designed element on the virtual merchandise image, and a second designed element may be overlappingly displayed on the first designed element and the virtual merchandise image.

Additionally, the display unit 222 may be further configured to display the merchandise amount, the total element amount and/or the customized amount. In some embodiments, the display unit 222 may be further configured to display an amount corresponding to the designed image and an amount corresponding to the designed element. In some embodiments, the display unit 222 may be further configured to display the updated merchandise amount, the updated total element amount, and/or the updated customized amount.

Additionally, the display unit 222 may be further configured to display various designed images stored in an image database 260, so that the user can directly select the preferred designed image among the various designed images for customization. In some embodiments, the various designed images may be displayed on the screen in a thumbnail arrangement, so that the user can more conveniently select preferred designed images.

Additionally, the display unit 222 may be further configured to display various merchandise information stored in the merchandise database 270 so that the user can directly select specific merchandise information among the various merchandise information for customization. In some embodiments, the various merchandise information may be displayed on the screen in the form of a drop-down menu, so that the user can more conveniently select specific merchandise information.

The editing unit 223 may be configured to edit the designed element. More specifically, the editing unit 223 can edit the designed element based on the instructions associated with various edit operations. In some embodiments, the edits performed, for example, may be newly adding a sticker image as a designed element, locking/hiding/deleting a designed element, adjusting the size/position/rotation angle/layer order of the designed element, and image transformation of the designed element, but not limited thereto. In some embodiments, the editing unit 223 may be further configured to edit text and/or images (e.g., photographic files) provided by the user, which, for example, may be newly adding/locking/hiding/deleting text, adjusting the content/size/color/font/rotation angle/layer order of the text, newly adding/removing text effects, newly adding/locking/hiding/deleting image content corresponding to the photographic file, adjusting the size/position/rotation angle/layer order of the image content corresponding to the photographic file, but not limited to thereto. In some embodiments, the editing unit 223 can not only edit the designed elements in the designed image, but can also edit the designed elements in the current customized virtual image, thereby generating a new customized virtual image.

The image generation unit 224 may be configured to generate customized virtual images. More specifically, after the edit operation is completed by the editing unit 223, the image generation unit 224 can generate a customized virtual image based on the current image content.

The amount calculation unit 225 may be configured to calculate a total element amount. More specifically, when a customized virtual image is generated by the image generation unit 224, the amount calculation unit 225 can calculate the total element amount based on the content of the current customized virtual image. In other words, the amount calculation unit 225 can calculate the total element amount based on the designed elements used in the customized virtual image. For example, when a total of three designed elements are used in a customized virtual image, since each of the three designed elements has its own corresponding amount, the amount calculation unit 225 can sum up the corresponding amounts of the three designed elements to calculate the total element amount.

In some embodiments, the amount calculation unit 225 may be further configured to judge whether the designed elements used in the customized virtual image are the same, and then calculate the total element amount according to the result of the judgment. Since each designed element has its own corresponding element identification code, the amount calculation unit 225 can judge whether the designed elements used in the customized virtual image are the same according to the element identification code corresponding to each designed element. For example, when a total of five designed elements are used in a customized virtual image, if the element identification codes corresponding to each of the five designed elements are the same, then the amount calculation unit 225 can regard the five designed elements as the same designed element and count them only once after the judgment is completed, that is, the calculation result of the total element amount is the amount of one designed element.

In some embodiments, the amount calculation unit 225 may be further configured to judge whether the designed elements used in the customized virtual image belong to the same group, and then calculate the total element amount according to the result of the judgment. Since each designed element has its own corresponding group identification code, the amount calculation unit 225 can judge whether the designed elements used in the customized virtual image belong to the same group according to the group identification code corresponding to each designed element. For example, when a total of five designed elements are used in a customized virtual image, if the group identification codes corresponding to the five designed elements are the same, then the amount calculation unit 225 can identify the five designed elements as the designed elements of the same group and count them only once after the judgment is completed, that is, the calculation result of the total element amount is the amount of one designed element.

In addition, the amount calculation unit 225 may be further configured to calculate the customized amount. More specifically, the amount calculation unit 225 can sum up the merchandise amount and the total element amount to calculate the customized amount. In some embodiments, the merchandise amount can be determined based on the merchandise information or the merchandise change information. For example, if the merchandise information is a transparent phone case applied to a smartphone, the merchandise price can be decided based on the information stored in the merchandise database 270. Since the amount calculation unit 225 can obtain the merchandise amount of a specific merchandise from the merchandise database 270 and calculate the total element amount according to the content of the customized virtual image, the amount calculation unit 225 can further sum up the current merchandise amount and the current total element amount, so as to calculate the current customized amount.

The update unit 226 may be configured to update the merchandise amount, the total element amount and/or the customized amount. Since the image generation unit 224 can generate a new customized virtual image according to the current image content after the edit operation is completed, the amount calculation unit 225 can calculate a new total element amount and/or a new customized amount according to the content of the new customized virtual image. After the new total element amount and/or the new customized amount is generated by the amount calculation unit 225, the update unit 226 can replace the previous total element amount with the new total element amount and/or replace the previous customized amount with a new customized amount, so as to update the calculation result of the total element amount and/or the customized amount, thereby providing the total element amount and/or customized amount corresponding to the new customized virtual image in real time.

In addition, since the receiving unit 221 can further receive merchandise change information, the amount calculation unit 225 can obtain a new merchandise amount (i.e., the amount corresponding to the merchandise change information) from the merchandise database 270. After the new merchandise amount has been determined through the merchandise calculation unit 225, the updated unit 226 can replace the previous merchandise amount with the new merchandise amount, and can further replace the previous customized amount with the new customized amount, so as to update the calculation result of the merchandise amount and/or the customized amount, thereby providing the merchandise amount and/or the customized amount corresponding to the new customized virtual image in real time.

The prompting unit 227 may be configured to prompt a warning message. More specifically, the prompting unit 227 decides whether to prompt a warning message according to the image analysis result generated by the image analysis model 290. When the image analysis result indicates that there is a copyright dispute in the content of the customized virtual image, the prompting unit 227 can prompt a warning message. Conversely, when the image analysis result fails to indicate that there is a copyright dispute in the content of the customized virtual image, the prompting unit 227 will not prompt a warning message. In some embodiments, the prompting unit 227 may prompt a warning message by creating a pop-up window, wherein the pop-up window includes a text box and/or a pattern associated with the warning.

The output unit 228 may be configured to output a customized virtual image, merchandise information and/or merchandise change information. More specifically, after the receiving unit 221 receives a request of determining output, the output unit 228 may output a customized virtual image, merchandise information and/or merchandise change information. In addition, the output unit 228 may be further configured to output the merchandise amount, the total element amount and/or the customized amount. Similarly, after the receiving unit 221 receives a request of determining output, the output unit 228 may output the merchandise amount, the total element amount and/or the customized amount.

In some embodiments, the processing module 220 may further include an image transformation model 280, wherein the image transformation model 280 may be configured to perform image transformation for the designed elements. More specifically, after the designed elements are input into the image transformation model 280, the image transformation model 280 will perform image transformation for the designed elements that are input. In some embodiments, the performed image transformation, for example, may be cartoonizing, abstracting, sketching, or three-dimensionalizing the designed elements, but is not limited thereto. In some embodiments, the image transformation model 280 may be an algorithm capable of performing image transformation on an image that is known to a person having ordinary knowledge in the art to which the present disclosure belongs, such as Adaptive Attention Normalization (AdaAttN) or Deep Feature Rotation (DFR), but is not limited thereto.

Taking AdaAttN as an example, the AdaAttN can transform images into images with specific stylistic features. More specifically, the AdaAttN can learn the shallow and deep features of the imitated image based on the imitation image, and calculate the weighted statistics and normalization of each point, so that the analysis result can show the same local feature statistics as the imitated image. In addition, the AdaAttN derives a new local feature loss, so as to enhance the local visual quality. Whereby, the AdaAttN can perform a series of calculations and analyses on the imitated image, and transform the designed elements into an image with the features based on the features learned from the imitated image. For example, when the imitated image is an abstract image, the image transformation model 280 such as AdaAttN can transform the designed elements into designed elements with abstract stylistic features.

In some embodiments, the processing module 220 may further include an image analysis model 290, wherein the image analysis model 290 can be configured to analyze the content of a customized virtual image and produce an image analysis result. More specifically, after the receiving unit 221 receives a request of completing editing, the image analysis model 290 analyzes the content of the customized virtual image and produces an image analysis result. In some embodiments, the image analysis model 290 may be an algorithm capable of analyzing the content of the image that is known to a person having ordinary knowledge in the art to which the present disclosure belongs, such as the Google Vision API, but is not limited thereto. For example, the image analysis model 290 such as the Google Vision API can analyze the content of a customized virtual image, and then infer whether there is a copyright dispute over the content of the customized virtual image, and then generate an image analysis result based on the inference.

In some embodiments, the processing module 220 may be further configured to couple with the image database 260 and/or the merchandise database 270, so as to receive specific data from the image database 260 and/or the merchandise database 270 and/or store specific data in the image database 260 and/or the merchandise database 270. In some embodiments, the image database 260 and/or the merchandise database 270 may be established in a computing device 200 and/or a server 120.

The image database 260 can be configured to store the data associated with the image. More specifically, the image database 260 can store various images such as designed images, designed elements, merchandise virtual images, merchandise change virtual images and/or customized virtual images. In addition, the image database 260 can further store the element identification code corresponding to the designed element, the group identification code corresponding to the group to which the designed element belongs and/or the image identification codes respectively corresponding to the designed image, the merchandise virtual image, the merchandise change virtual image and the customized virtual image. In some embodiments, the image database 260 may be realized by using, for example, Amazon Simple Storage Service (AWS S3), but not limited thereto.

The merchandise database 270 may be configured to store data associated with physical objects. More specifically, the merchandise database 270 may store the merchandise name (e.g., a transparent phone case applied to a smartphone), the merchandise color (e.g., the color of the smartphone itself and/or the color of the phone case itself), the merchandise contour (e.g., the shape, component configuration and size of the smartphone itself and/or the shape, component configuration and size of the phone case itself) and the merchandise identification code (e.g., A001), etc.

In some embodiments, the amount corresponding to the designed element and/or the amount corresponding to the designed image may be stored in the image database 260, and the amount corresponding to the merchandise information and/or the amount corresponding to the merchandise change information may be stored in the merchandise database 270. In some embodiments, the data associated with the amount may also be stored separately in a database such as an amount database (not shown in figure). In some embodiments, the amount database may be realized by using, for example, Amazon Relational Database Service (AWS RDS), but not limited thereto.

Thus, through the processing module 220 shown in FIG. 2, each step of any of the methods for customizing the appearance of the merchandise described in the present disclosure can be performed to customize the customized choice result selected by the user, thereby generating the customized virtual image more effectively.

Additionally, the processing module 220 is capable of producing other beneficial effects after the completion of the steps of the various methods for customizing the appearance of the merchandise described in the present disclosure. For example, the processing module 220 can dynamically update the customized amount with the change of the content of the customized virtual image, so that the user can more clearly grasp the customized amounts respectively corresponding to the displayed result of various customized virtual images.

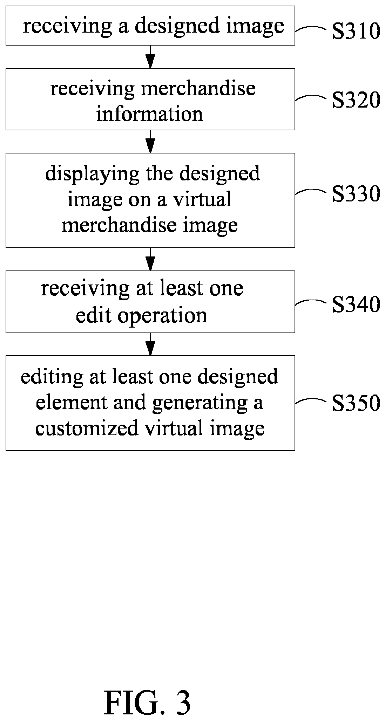

Referring to FIG. 3, FIG. 3 is a flowchart illustrating a method for customizing an appearance of a merchandise of an embodiment of the present disclosure. The method shown in FIG. 3 can be executed by a processing module 220 shown in FIG. 2, thereby customizing a customized choice result selected by a user, wherein the customized choice result may include a designed image and merchandise information. The method shown in FIG. 3 may include steps S310, S320, S330, S340, and S350.

In step S310, receiving a designed image is performed, wherein the designed image includes at least one designed element. More specifically, after the user selects the preferred designed image among various designed images for customization, the processing module 220 can receive the designed image according to the customized choice result selected by the user. In some embodiments, the designed image described in the present disclosure may also be a combined image including multiple designed elements.

In step S320, receiving merchandise information is performed. More specifically, after the user selects specific merchandise information among various merchandise information for customization, the processing module 220 can receive the merchandise information according to the customized choice result selected by the user. In some embodiments, step S320 may be executed successively after step S310. For example, the merchandise information received may be a phone case applied to a smartphone, a phone holder, a headphone case, an AirTag case, a tablet case, or a water bottle. In some embodiments, the merchandise information received may also be information about other physical objects, especially physical objects (such as clothes, mugs, or canvas bags) that consumers tend to pay special attention to the appearance of the merchandise.

In step S330, displaying the designed image on a virtual merchandise image is performed. More specifically, the processing module 220 can overlappingly display the designed image received by the step S310 on the virtual merchandise image corresponding to the merchandise information received by the step S320. Since the content of the virtual merchandise image is defined according to the physical object, the virtual merchandise image can realistically display a visual image having the same features as the physical object, and the above-described having the same features as the physical object may mean that it has the same appearance, component configuration, size, and color as the physical object. In some embodiments, step S330 may be executed successively after step S310 and step S320.

In step S340, receiving at least one edit operation is performed. More specifically, the processing module 220 can receive an instruction associated with the edit operation, wherein the edit operation is decided by the user. In some embodiments, the edit operation may be used to edit designed elements in a designed image. In some embodiments, the edit operation may also be used to edit text in the designed image and/or images (e.g., photographic files) provided by the user. In some embodiments, step S340 may be executed successively after step S330.

In step S350, at least one designed element is edited and a customized virtual image is generated. More specifically, after receiving the instruction associated with the edit operation, the processing module 220 can perform corresponding editing according to the received instruction, and generate a customized virtual image according to the current image content after completing the editing. In some embodiments, step S350 may be executed successively after step S340. The editing made via step S350 may include:
- Newly adding a sticker image as a designed element: adding a sticker image selected by the user to the current image, and using the sticker image as a designed element.
- Newly adding a text box as a designed element: adding a text box compiled by the user to the current image, and using the text box as a designed element.
- Newly adding an image provided by the user as a designed element: adding an image (e.g., a photographic file) provided by the user to the current image, and using the image as a designed element.
- Locking a designed element: setting one or more designed elements in the current image to a locked state, thereby temporarily fixing the size, position and/or rotation angle of the designed elements.
- Hiding a designed element: setting one or more designed elements in the current image to a hidden state, thereby temporarily not displaying the designed elements.
- Displaying a designed element: setting one or more designed elements in the current image to a displaying state, thereby temporarily displaying the designed elements.
- Zooming in or zooming out a designed element: adjusting the size of one or more designed elements in the current image. In some embodiments, the zooming in or zooming out the designed element may be edited in a proportional manner. In some embodiments, when the designed element is zoomed in or zoomed out through the editing unit 223, the display unit 222 can emphasize the area where the designed element can be displayed during zooming in or zooming out the designed element, so that the user can more clearly confirm whether the designed element exceeds the area that can be displayed during zooming in or zooming out. In some embodiments, areas where the designed elements can be displayed can be emphasized by using more prominent color blocks (e.g., fluorescent yellow). In other embodiments, areas where the designed elements can be displayed may be emphasized by using more prominent border lines (e.g., dark bold lines).
- Moving a designed element: adjusting the position of one or more designed elements in the current image. In some embodiments, the moving the designed element may be edited by means of mouse dragging. In some embodiments, when the designed element is moved by the editing unit 223, the display unit 222 may emphasize the area where the designed element can be displayed during moving the designed element, so that the user can more clearly confirm whether the designed element exceeds the area that can be displayed during the moving period.
- Rotating a designed element: adjusting the rotation angle of one or more designed elements in the current image. In some embodiments, the rotating the designed element may be edited by means of mouse dragging. In some embodiments, when the designed element is rotated by the editing unit 223, the display unit 222 may emphasize the area where the designed element can be displayed during rotating the designed element, so that the user can more clearly confirm whether the designed element exceeds the area that can be displayed during the rotation period.
- Setting layer order of designed elements: setting the layer order of one or more designed elements in the current image. In some embodiments, the layer order corresponding to each designed element can be set in the form of a cascading list. For example, when a cascading list is a first designed element, a second designed element, and a third designed element from top to bottom, it means that the layer order of the first designed element is set on the second and third designed elements, and the layer order of the second designed element is set on the third designed element. At this time, the display unit 222 can display the first designed element at the outmost surface layer, the third designed element at the lowest layer, and the second designed element in the middle layer between the first designed element and the third designed element. If there is an area of partial overlap between the first, second, and third designed elements, the second designed element will display overlappingly on the third designed element, and the first designed element will display overlappingly on the second and third designed elements. In some embodiments, after a new designed element is added to the current image, the layer order corresponding to the designed element may be initially set to the top of the cascading list, so as to display the designed element at the outmost surface layer. In some embodiments, the user can adjust the order of each designed element in a cascading list by means of mouse dragging, so as to change the layer order corresponding to each designed element.
- Transforming designed elements: performing image transformation for one or more designed elements in the current image. In some embodiments, the designed element may be input into the image transformation model 280, so as to perform image transformation for the designed element by the image transformation model 280. For example, designed elements can be transformed into the designed elements with specific stylistic features by the image transformation model 280 such as AdaAttN.
- Deleting designed elements: deleting one or more designed elements in the current image.

Thus, the method shown in FIG. 3 can customize according to the customized choice result selected by the user, so as to generate the customized virtual image more effectively, that is, the user can directly edit the designed image to generate the customized virtual image.

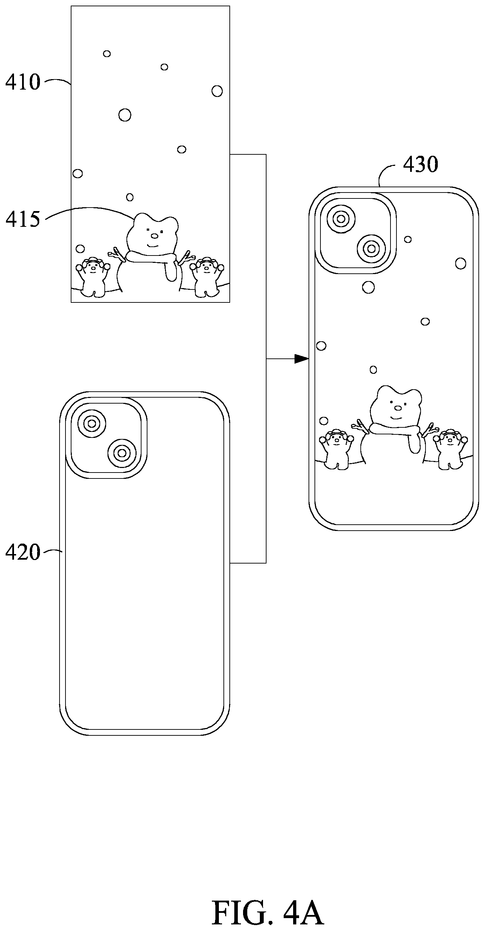

Referring to FIG. 4A, FIG. 4A is a schematic view illustrating the designed image 410 overlappingly displayed on the virtual merchandise image 420 corresponding to the merchandise information according to an embodiment of the present disclosure.

After step S310 is executed, the processing module 220 may receive a designed image 410 selected by the user, wherein the designed image 410 has at least one designed element 415. After the step S320 is executed, the processing module 220 may receive the merchandise information selected by the user, and may determine the virtual merchandise image 420 corresponding to the merchandise information from the image database 260 according to the merchandise information. After the step S330 is executed, the processing module 220 may overlappingly display the designed image 410 on the virtual merchandise image 420, that is, the displayed result 430. Thus, the user can edit the designed elements based on the displayed result 430 to generate a customized virtual image.

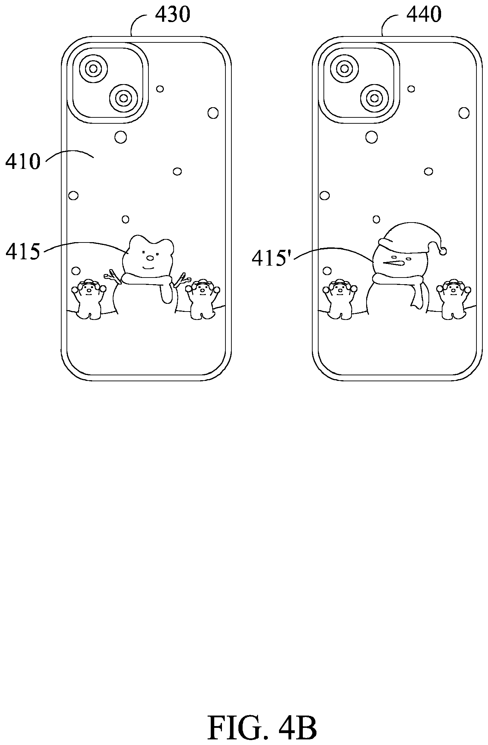

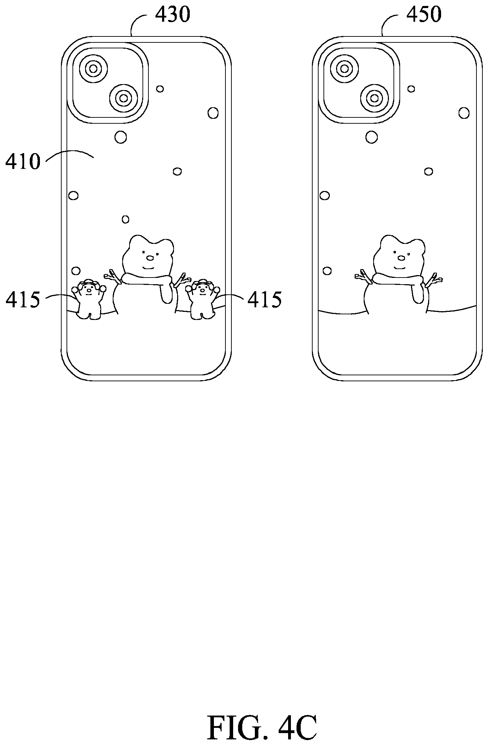

Referring to FIG. 4B and FIG. 4C, FIG. 4B is a schematic view illustrating editing at least one designed element 415 in the designed image 410 according to at least one edit operation of an embodiment of the present disclosure, and FIG. 4C is a schematic view illustrating editing at least one designed element 415 in the designed image 410 according to at least one edit operation of an embodiment of the present disclosure.

Taking FIG. 4B as an example, the user can edit the designed elements based on the displayed result 430 to generate a customized virtual image 440. After step S340 is executed, the processing module 220 may receive instructions associated with an edit operation (i.e., deleting a designed element, newly adding a sticker image as a designed element, and moving a designed element), wherein the edit operation is decided by the user. After the step S350 is executed, the processing module 220 can sequentially perform the corresponding editing according to the instructions received. More specifically, the processing module 220 can delete the designed element 415 according to the instruction associated with the deletion of the designed element, and generate a first customized virtual image according to the current image content after completing editing. Continuously, the processing module 220 can newly add a designed element 415' according to the instruction associated with newly adding a sticker image as a designed element, and generate a second customized virtual image according to the current image content after completing editing. Continuously, the processing module 220 can adjust the position of the designed element 415' according to the instruction associated with moving the designed element, and generate a third customized virtual image (i.e., the customized virtual image 440) according to the current image content after completing editing.

Taking FIG. 4C as an example, the user can edit the designed elements based on the displayed result 430 to generate a customized virtual image 450. After step S340 is executed, the processing module 220 may receive an instruction associated with an edit operation (i.e., deleting a designed element), wherein the edit operation is decided by the user. After the step S350 is executed, the processing module 220 can sequentially perform the corresponding editing according to the instruction received. More specifically, the processing module 220 can delete the designed element 415 (e.g., the bear at the left side of the snowman) according to the instruction associated with the deletion of the designed element, and generate a first customized virtual image according to the current image content after completing editing. Continuously, the processing module 220 can delete the designed element 415 (e.g., the bear at the right side of the snowman) according to the instruction associated with the deletion of the designed element, and, generate a second customized virtual image (i.e., the customized virtual image 450) according to the current image content after completing editing.

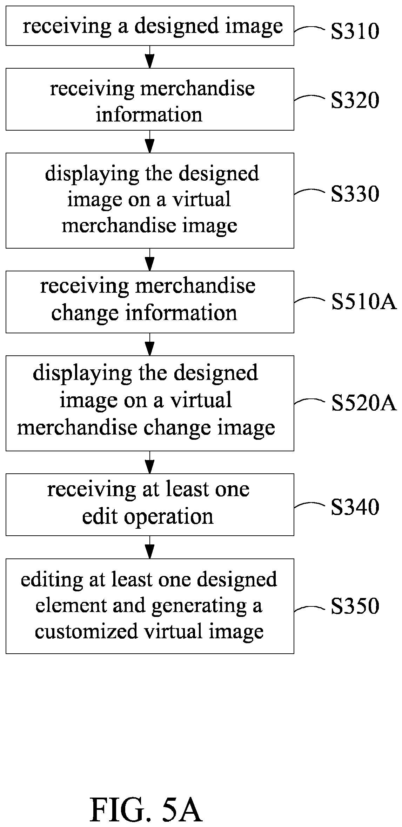

Referring to FIG. 5A, FIG. 5A is a flowchart illustrating the method for customizing the appearance of the merchandise according to an embodiment of the present disclosure. The method shown in FIG. 5A can be executed by the processing module 220 as shown in FIG. 2, thereby customizing a customized choice result selected by a user, wherein the customized choice result may include a designed image, merchandise information, and merchandise change information.

The method shown in FIG. 5A may include steps S310, S320, S330, S340, S350, S510A, and S520A, wherein steps S310, S320, S330, S340, and S350 may be substantially the same as the steps shown in FIG. 3. That is, the method shown in FIG. 5A may include steps S310, S320, S330, S340, and S350 as shown in FIG. 3, and further include steps S510A and S520A.

In step S510A, receiving merchandise change information is performed. More specifically, after the user selects specific merchandise change information among various merchandise change information, the processing module 220 can receive the merchandise change information according to the customized choice result selected by the user, and replace the merchandise information received by the step S310 with the merchandise change information. In some embodiments, step S510A may be executed successively after step S330. In some embodiments, the merchandise change information may be substantially similar to the merchandise information. More specifically, the merchandise change information received may also be a phone case, a phone holder, a headphone case, an AirTag case, a tablet case, or a water bottle. In some embodiments, the merchandise change information received may also be information about other physical objects, especially physical objects (such as clothes, mugs or canvas bags) that consumers tend to pay special attention to the appearance of the merchandise.

In step S520A, displaying the designed image on a virtual merchandise change image is performed. More specifically, the processing module 220 can overlappingly display the designed image received by the step S310 on the virtual merchandise change image corresponding to the merchandise change information received by the step S510A. Since the content of the virtual merchandise change image is defined according to the physical object, the virtual merchandise change image can realistically display a visual image having the same features as the physical object, and the above-described having the same features as the physical object may mean that it has the same appearance, component configuration, size, and color as the physical object. In some embodiments, step S520A may be executed successively after step S310 and step S510A.

Thus, the merchandise information received by step S310 can be directly replaced by the merchandise change information according to the user's needs through the method shown in FIG. 5A, so that the user can directly complete the subsequent steps on the virtual merchandise change image without re-operation, thereby generating a customized virtual image more effectively.

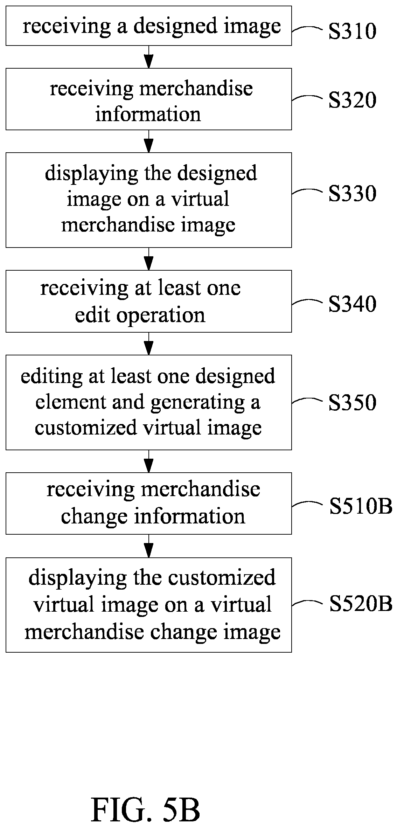

Referring to FIG. 5B, FIG. 5B is a flowchart illustrating the method for customizing the appearance of the merchandise according to an embodiment of the present disclosure. The method shown in FIG. 5B can be executed by the processing module 220 as shown in FIG. 2, thereby customizing a customized choice result selected by a user, wherein the customized choice result may include a designed image, merchandise information, and merchandise change information.

The method shown in FIG. 5B may include steps S310, S320, S330, S340, S350, S510B, and S520B, wherein steps S310, S320, S330, S340, and S350 may be substantially the same as the steps shown in FIG. 3. That is, the method shown in FIG. 5B may include steps S310, S320, S330, S340, and S350 as shown in FIG. 3, and further include steps S510B and S520B.

In step S510B, receiving merchandise change information is performed. More specifically, after the user selects specific merchandise change information among various merchandise change information, the processing module 220 can receive the merchandise change information according to the customized choice result selected by the user, and replace the merchandise information received by the step S310 with the merchandise change information. In some embodiments, step S510B may be executed successively after step S350. In some embodiments, the merchandise change information may be substantially similar to the merchandise information. More specifically, the merchandise change information received may also be a phone case, a phone holder, a headphone case, an AirTag case, a tablet case, or a water bottle. In some embodiments, the merchandise change information received may also be information about other physical objects, especially physical objects (such as clothes, mugs or canvas bags) that consumers tend to pay special attention to the appearance of the merchandise.

In step S520B, displaying the customized virtual image on a virtual merchandise change image is performed. More specifically, the processing module 220 can overlappingly display a customized virtual image generated by the step S350 on the virtual merchandise change image corresponding to the merchandise change information received by the step SS 10B. Since the content of the virtual merchandise change image is defined according to the physical object, the virtual merchandise change image can realistically display a visual image having the same features as the physical object, and the above-described having the same features as the physical object may mean that it has the same appearance, component configuration, size, and color as the physical object. In some embodiments, step S520B may be executed successively after step S350 and step S510B.

Thus, the merchandise information received by step S310 can be directly replaced by the merchandise change information according to the user's needs through the method shown in FIG. 5B, so that the user can directly overlappingly display the customized virtual image that is preferred by the user on the virtual merchandise change image without re-operation. At this time, the user can decide whether the designed elements in the customized virtual image need to be further edited according to the displayed result, thereby more effectively generating a customized virtual image suitable for the merchandise change information according to the result of the previous customized virtual image.

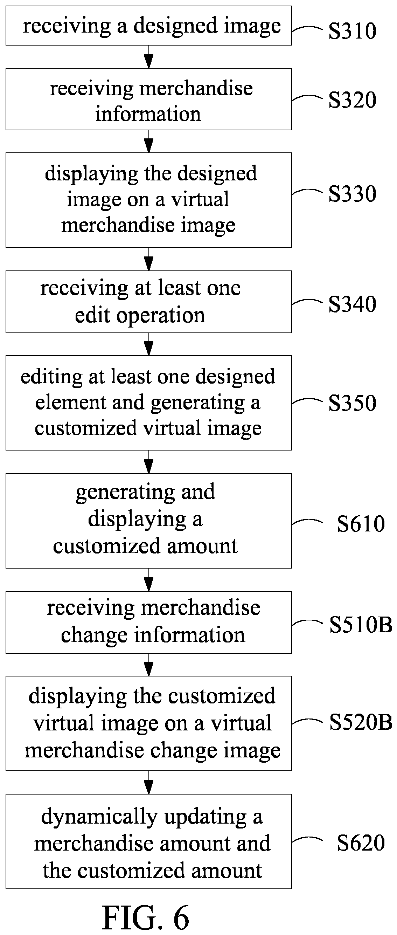

Referring to FIG. 6, FIG. 6 is a flowchart illustrating the method for customizing the appearance of the merchandise according to an embodiment of the present disclosure. The method shown in FIG. 6 can be executed by the processing module 220 as shown in FIG. 2, thereby customizing a customized choice result selected by a user, wherein the customized choice result may include a designed image, merchandise information, and merchandise change information.

The method shown in FIG. 6 may include steps S310, S320, S330, S340, S350, S510B, S520B, S610, and S620, wherein steps S310, S320, S330, S340, and S350 may be substantially the same as the steps shown in FIG. 3, and steps S510B and S520B may be substantially the same as the steps shown in FIG. 5B. That is, the method shown in FIG. 6 may include steps S310, S320, S330, S340, and S350 as shown in FIG. 3 and steps S510B and S520B as shown in FIG. 5B, and further include steps S610 and S620.

In step S610, generating and displaying a customized amount is performed. More specifically, the processing module 220 may generate a customized amount according to the merchandise amount and the total element amount, and the generated customized amount may be displayed by the display module 250. In some embodiments, the processing module 220 may sum up the merchandise amount and the total element amount, so as to calculate the customized amount. That is to say, after the processing module 220 determines the merchandise amount and calculates the total element amount, the processing module 220 may further generate a customized amount. In some embodiments, step S610 may be executed successively after step S350. In some embodiments, the processing module 220 may further display the determined merchandise amount and/or the calculated total element amount by the display module 250.

In some embodiments, since the processing module 220 can determine the amount corresponding to the merchandise information from the merchandise database 270 according to the merchandise identification code corresponding to the merchandise information, the processing module 220 can decide the value of the merchandise amount according to the merchandise information.

In some embodiments, the total element amount may be decided according to the content of the customized virtual image. That is, the processing module 220 may calculate the total element amount according to the designed elements used in the customized virtual image. In some embodiments, since the processing module 220 can determine the amount corresponding to each designed element from the image database 260 according to the element identification code corresponding to each designed element, the processing module 220 can sum up the amount corresponding to each designed element, so as to calculate the value of the total element amount.

In step S620, dynamically updating a merchandise amount and the customized amount is performed. More specifically, after receiving the merchandise change information, the processing module 220 can dynamically update the merchandise amount and the customized amount, that is, a new merchandise amount is generated according to the merchandise change information, and a new customized amount is generated according to the new merchandise amount. Continuously, the processing module 220 can further replace the current merchandise amount with the new merchandise amount, and replace the current customized amount with the new customized amount, thereby dynamically updating the merchandise amount and the customized amount. In some embodiments, step S620 may be executed successively after step S510B.

In some embodiments, since the processing module 220 can determine the amount corresponding to the merchandise change information from the merchandise database 270 according to the merchandise identification code corresponding to the merchandise change information, the processing module 220 can decide the value of the new merchandise amount according to the merchandise change information.

Thus, the method shown in FIG. 6 can not only generate the customized virtual image more effectively, but can also provide the customized amount corresponding to the displayed result in real time according to the customized choice result of the user, so that the user can grasp the value of the updated customized amount in real time.

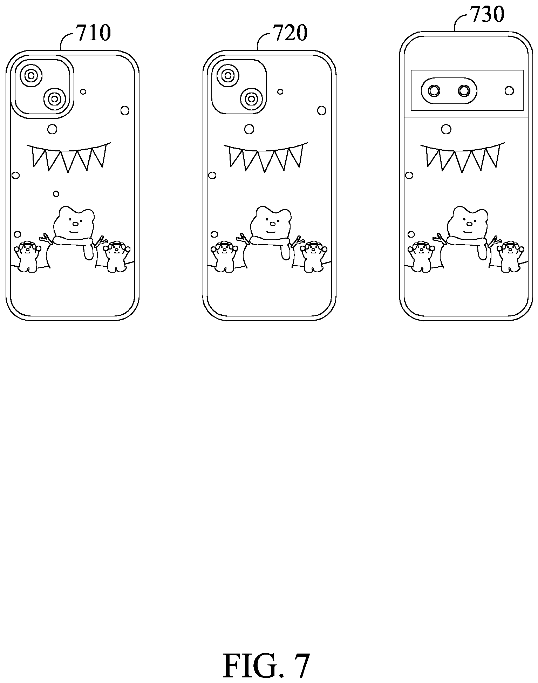

Referring to FIG. 7, FIG. 7 is a schematic view illustrating the customized virtual image overlappingly displayed on the virtual merchandise change image corresponding to the merchandise change information according to an embodiment of the present disclosure.

After the step S350 is executed, the processing module 220 can generate a customized virtual image, and can overlappingly display the customized virtual image on the virtual merchandise image corresponding to the merchandise information received by the step S320 (i.e., the first displayed result 710). Continuously, after the step S610 is executed, the processing module 220 can generate a first customized amount according to the first merchandise amount and the total amount of the first element.

After step S510B is executed, the processing module 220 can receive the merchandise change information selected by the user. Continuously, after the step S520B is executed, the processing module 220 may display a virtual merchandise change image corresponding to the merchandise change information, and directly display the customized virtual image on the virtual merchandise change image (i.e., the second displayed result 720). Continuously, after the step S620 is executed, the processing module 220 can determine the second merchandise amount and generate a second customized amount, and respectively replace the first merchandise amount and the first customized amount with the second merchandise amount and the second customized amount, so as to dynamically update the merchandise amount and the customized amount.

Continuously, after step S510B is executed again, the processing module 220 may receive the merchandise change information selected by the user again. Continuously, after the step S520B is executed again, the processing module 220 may display a virtual merchandise change image corresponding to the merchandise change information again, and directly display the customized virtual image on the virtual merchandise change image (i.e., the third displayed result 730) again. Continuously, after the step S620 is executed again, the processing module 220 can determine the third merchandise amount and generate a third customized amount, and respectively replace the second merchandise amount and the second customized amount with the third merchandise amount and the third customized amount, so as to dynamically update the merchandise amount and the customized amount again.

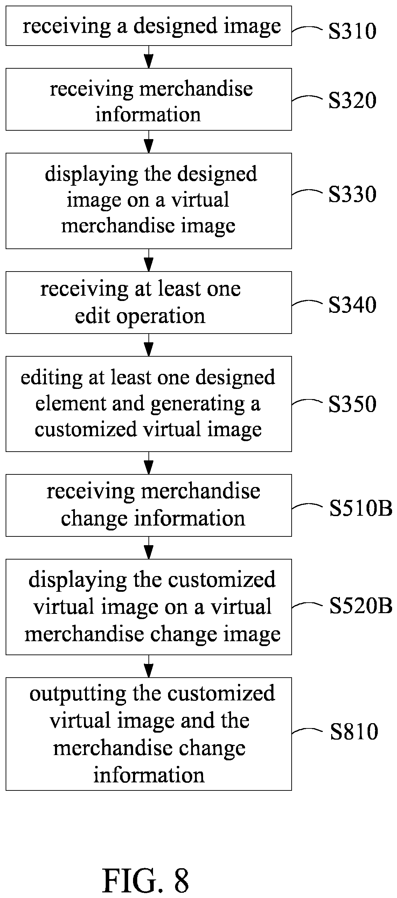

Referring to FIG. 8, FIG. 8 is a flowchart illustrating the method for customizing the appearance of the merchandise according to an embodiment of the present disclosure. The method shown in FIG. 8 can be executed by the processing module 220 as shown in FIG. 2, thereby customizing a customized choice result selected by a user, wherein the customized choice result may include a designed image, merchandise information, and merchandise change information.

The method shown in FIG. 8 may include steps S310, S320, S330, S340, S350, S510B, S520B, and S810, wherein steps S310, S320, S330, S340, and S350 may be substantially the same as the steps shown in FIG. 3, and steps S510B and S520B may be substantially the same as the steps shown in FIG. 5B. That is, the method shown in FIG. 8 may include steps S310, S320, S330, S340, and S350 as shown in FIG. 3 and steps S510B and S520B as shown in FIG. 5B, and further include step S810.

In step S810, outputting the customized virtual image and the merchandise change information is performed. More specifically, after receiving a request of determining output, the processing module 220 can transmit the customized virtual image and the merchandise change information to the image output device 310 by the output module 240, so that the customized virtual image can be physically output on the physical object corresponding to the merchandise change information by the image output device 310. In some embodiments, step S810 may be executed successively after step S520B.

In some embodiments, the image output device 310 may be a device that can physically output a virtual image on a physical object, and it may be a printing apparatus applied in such as garment printing, automobile paint printing, mobile phone case printing, or sticker printing, but is not limited thereto.

Thus, the method shown in FIG. 8 can not only generate the customized virtual image more effectively, but can also provide manufacturers to manufacture specific products with the appearance of the merchandise that is preferred by the user according to the customized virtual image and merchandise change information, so that the user can obtain an actual object (i.e., a specific mobile phone case printed with a customized virtual image) that is the same as the displayed result (e.g., a second displayed result 720). In addition, the customized virtual image can be more widely used in various physical output requirements such as garment printing, automobile paint printing, mobile phone case printing or stickers by the image output device 310.

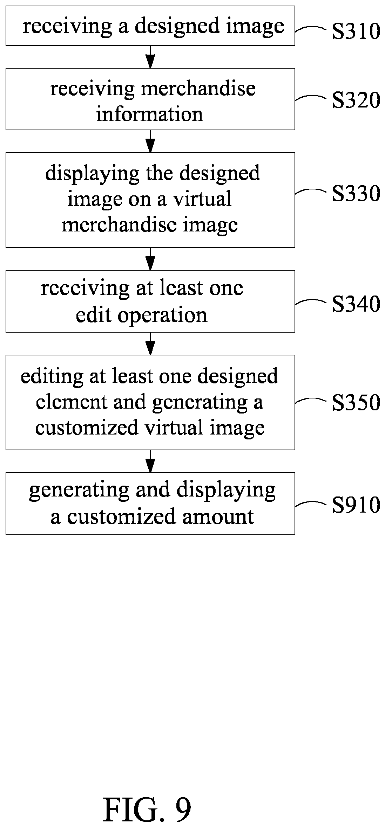

Referring to FIG. 9, FIG. 9 is a flowchart illustrating the method for customizing the appearance of the merchandise according to an embodiment of the present disclosure. The method shown in FIG. 9 can be executed by the processing module 220 as shown in FIG. 2, thereby customizing a customized choice result selected by a user, wherein the customized choice result may include a designed image and merchandise information.

The method shown in FIG. 9 may include steps S310, S320, S330, S340, S350, and S910, wherein steps S310, S320, S330, S340, and S350 may be substantially the same as the steps shown in FIG. 3. That is, the method shown in FIG. 9 may include steps S310, S320, S330, S340, and S350 as shown in FIG. 3, and further include step S910.

In step S910, generating and displaying a customized amount is performed. More specifically, the processing module 220 can generate a customized amount according to the merchandise amount and the total element amount, and display the generated customized amount by the display module 250. In some embodiments, the processing module 220 can sum up the merchandise amount and the total element amount, so as to calculate the customized amount. In some embodiments, step S910 is essentially the same as step S610 as shown in FIG. 6. In some embodiments, step S910 may be executed successively after step S350. In some embodiments, the processing module 220 may perform step S910 only after receiving a request of completing editing, thereby reducing the number of operations required by the processing module 220.

Thus, the method shown in FIG. 9 not only can generate the customized virtual image more effectively, but can also generate the customized amount corresponding to the displayed result, so that the user can more clearly grasp the value of the customized amount corresponding to the displayed result.

In some embodiments, the processing module 220 can further dynamically update the total element amount after the new edit operation is completed, and dynamically update the customized amount as the total element amount changes. More specifically, after the new edit operation is completed, the processing module 220 can dynamically update the total element amount and the customized amount, that is, according to the content of the new customized virtual image, a new total element amount is generated, and according to, a new customized amount is generated. Continuously, the processing module 220 can further replace the current total element amount with the new total element amount, and replace the current customized amount with the new customized amount, so as to dynamically update the total element amount and the customized amount.

Thus, the method for customizing the appearance of the merchandise described in the present disclosure can not only generate a customized virtual image more efficiently, but can also provide the total element amount and the customized amount corresponding to the new displayed result in real time in response to the new edit operation, so that the user can grasp the value of the updated customized amount in real time.

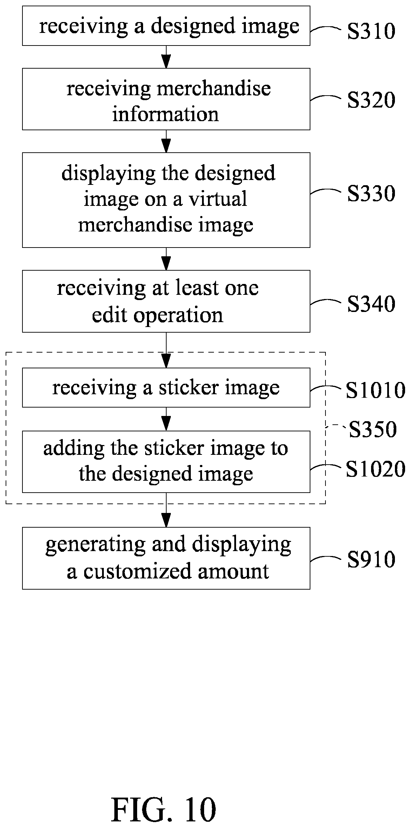

Referring to FIG. 10, FIG. 10 is a flowchart illustrating the method for customizing the appearance of the merchandise according to an embodiment of the present disclosure. The method shown in FIG. 10 can be executed by the processing module 220 as shown in FIG. 2, thereby customizing a customized choice result selected by a user, wherein the customized choice result may include a designed image, merchandise information, and a sticker image.

The method shown in FIG. 10 may include steps S310, S320, S330, S340, S350, S910, S1010 and S1020, wherein steps S310, S320, S330, S340, and S350 may be substantially the same as the steps shown in FIG. 3, and step S910 may be substantially the same as the step shown in FIG. 9, and step S350 can be completed by executing steps S1010 and S1020.

In step S1010, receiving a sticker image is performed. More specifically, after the user selects the preferred designed image among various sticker images for customization, a sticker image is received according to the customized choice result selected by the user. In some embodiments, various sticker images may be stored in the image database 260, and the processing module 220 may display various sticker images stored in the image database 260 by the display unit 222. In some embodiments, various sticker images may be displayed on the screen in a thumbnail arrangement, so that the user can more conveniently select preferred designed images. In some embodiments, since various sticker images can be classified according to the creator, the various sticker images can be stored together in the image database 260 with their corresponding group identification codes, so that the processing module 220 arranges the sticker images of the same group identification code and displays them together, so that the user can more conveniently select the preferred designed images.

In step S1020, adding the sticker image to the designed image is performed. More specifically, the processing module 220 can add the sticker image selected by a user as a designed element to the designed image, so as to generate a customized virtual image. In some embodiments, the processing module 220 may add a sticker image selected by the user as a designed element to the first customized virtual image (i.e., the current customized virtual image), so as to generate a second customized virtual image (i.e., a new customized virtual image).

Thus, the method shown in FIG. 10 can customize the customized choice result selected by the user, thereby generating the customized virtual image more effectively, that is, the user can directly add the sticker image selected by the user to the current image to generate the customized virtual image that is preferred by the user.

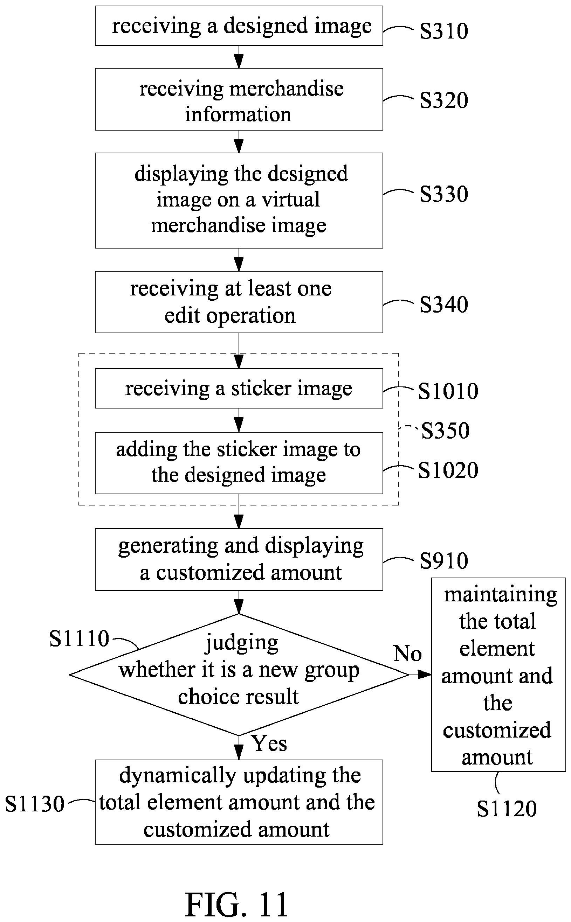

Referring to FIG. 11, FIG. 11 is a flowchart illustrating the method for customizing the appearance of the merchandise according to an embodiment of the present disclosure. The method shown in FIG. 11 can be executed by the processing module 220 as shown in FIG. 2, thereby customizing a customized choice result selected by a user, wherein the customized choice result may include a designed image, merchandise information and a sticker image.

The method shown in FIG. 11 may include steps S310, S320, S330, S340, S350, S910, S1010, S1020, S1110, S1120 and S1130, wherein steps S310, S320, S330, S340, and S350 may be substantially the same as the steps shown in FIG. 3, and step S910 may be substantially the same as the step shown in FIG. 9, and steps S1010 and S1020 may be substantially the same as the step shown in FIG. 10. That is, the method shown in FIG. 11 may include steps S310, S320, S330, S340, and S350 as shown in FIG. 3, step S910 as shown in FIG. 9 and steps S1010 and S1020 as shown in FIG. 10, and further include steps S1110, S1120 and S1130.

In step 51110, judging whether it is a new group choice result is performed. More specifically, the processing module 220 can judge whether the sticker image received by executing step S1010 is a new group choice result. In some embodiments, since the processing module 220 can determine the group identification code corresponding to each designed element in the current image, the processing module 220 can compare the group identification code corresponding to the sticker image with the group identification code corresponding to each designed element in the current image after receiving the sticker image, so as to judge whether the group identification code corresponding to the sticker image is a new group identification code.

When the group identification code corresponding to the sticker image is not a new group identification code, it means that the received sticker image is not a new group choice result (i.e., the user repeatedly adds the sticker image that has been used as a designed element in the current image), the processing module 220 will continue to execute step S1 120; Conversely, when the group identification code corresponding to the sticker image is a new group identification code, it means that the received sticker image is a new group choice result (i.e., the user has added a sticker image that has not yet been used as a designed element in the current image), then the processing module 220 will continue to execute step S1 130.

In step S1120, maintaining the total element amount and the customized amount is performed. More specifically, since the received sticker image is not a new group choice result (i.e., the user repeatedly adds a sticker image that is already used as a designed element in the current image), the processing module 220 can keep the value of the total element amount and the value of the customized amount unchanged.

In step S1130, dynamically updating the total element amount and the customized amount is performed. More specifically, since the received sticker image is a new group choice result (i.e., the user has added a sticker image that has not yet been used as a designed element in the current image), the processing module 220 can dynamically update the total element amount, and dynamically update the customized amount as the total element amount changes.

In some embodiments, since the processing module 220 can determine the amount corresponding to each designed element from the image database 260 according to the element identification code corresponding to each designed element, the processing module 220 can sum up the amount corresponding to each designed element, so as to calculate the value of the total element amount. In some embodiments, the processing module 220 can sum up the merchandise amount and the total element amount, so as to calculate the customized amount. Continuously, the processing module 220 can further replace the current total element amount with the new total element amount, and replace the current customized amount with the new customized amount, so as to dynamically update the total element amount and the customized amount.

For example, after the processing module 220 receives a sticker image selected by the user, the processing module 220 can compare the group identification code corresponding to the sticker image with the group identification code corresponding to each designed element in the designed image, so as to judge whether the received sticker image is a new group choice result. When the processing module 220 determines that the received sticker image is a new group choice result, the processing module 220 can sum up the amount corresponding to the sticker image and the current total element amount, so as to calculate a new total element amount. In addition, the processing module 220 can further sum up the new total element amount and the merchandise amount, so as to calculate a new customized amount. Continuously, the processing module 220 can further replace the current total element amount with the new total element amount, and replace the current customized amount with the new customized amount, so as to dynamically update the total element amount and the customized amount.

Thus, the method shown in FIG. 11 can not only generate the customized virtual image more effectively, but can also provide the customized amount corresponding to the displayed result in real time in response to the customized choice result of the user, so that the user can grasp the value of the updated customized amount in real time. In addition, the method shown in FIG. 11 can also conditionally execute the update of the total element amount and/or the customized amount (i.e., determining whether to execute the step of updating the total element amount and/or the customized amount by executing the step of judgment), thereby reducing the number of operations required by the processing module 220.

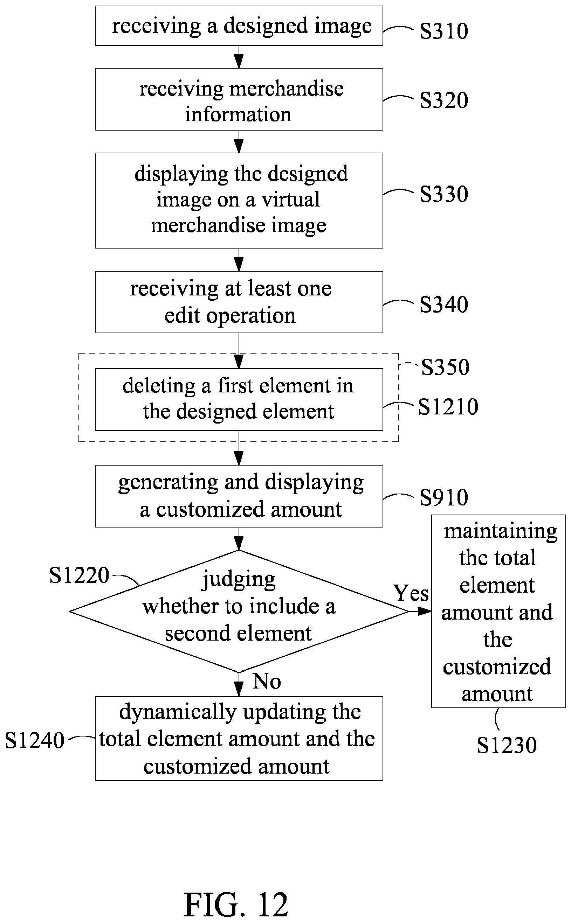

Referring to FIG. 12, FIG. 12 is a flowchart illustrating the method for customizing the appearance of the merchandise according to an embodiment of the present disclosure. The method shown in FIG. 12 can be executed by the processing module 220 as shown in FIG. 2, thereby customizing a customized choice result selected by a user, wherein the customized choice result may include a designed image and merchandise information.

The method shown in FIG. 12 may include steps S310, S320, S330, S340, S350, S910, S1210, S1220, S1230 and S1240, wherein steps S310, S320, S330, S340, and S350 may be substantially the same as the steps shown in FIG. 3, and step S910 may be substantially the same as the step shown in FIG. 9, and steps S1010 and S1020 may be substantially the same as the step shown in FIG. 10. That is, the method shown in FIG. 11 may include steps S310, S320, S330, S340, and S350 as shown in FIG. 3, step S910 as shown in FIG. 9, and further include steps S1210, S1220, S1230 and S1240, wherein step S350 can be completed by executing step S1210.

In step S1210, deleting a first element in the designed element is performed. More specifically, the processing module 220 may delete one or more designed elements from a designed image after receiving an instruction associated with the deletion of a designed element, so as to generate a customized virtual image. In some embodiments, the processing module 220 may further delete one or more designed elements in the first customized virtual image (i.e., the current customized virtual image), so as to generate a second customized virtual image (i.e., a new customized virtual image).

In step S1220, judging whether to include a second element is performed. More specifically, the processing module 220 can judge whether the remaining designed elements in the current image include a second element. In some embodiments, since the processing module 220 can determine the group identification code corresponding to each designed element in the current image, the processing module 220 can compare the group identification code corresponding to the designed element to be deleted with the group identification code corresponding to each designed element in the current image after receiving the instruction associated with the deletion of the designed elements, so as to judge whether the remaining designed elements in the current image include a second element, wherein the second element is other designed element that is the same as the sticker group to which the first element belongs (i.e., the group identification code corresponding to the second element is the same as the group identification code corresponding to the first element).

When the remaining designed elements in the current image include a second element, it means that there are still other designed elements that have the same group identification code corresponding to the first element in the current image, the processing module 220 will continue to execute step S1230; Conversely, when the remaining designed elements in the current image fail to include the second element, it means that no other designed element with the same group identification code corresponding to the first element exists in the current image, then the processing module 220 will continue to execute step S1240.

In step S1230, maintaining the total element amount and the customized amount is performed. More specifically, since the remaining designed elements in the current image include a second element (i.e., there are still other designed elements in the current image that have the same group identification code corresponding to the first element), the processing module 220 can keep the value of the total element amount and the value of the customized amount unchanged.

In step S1240, dynamically updating the total element amount and the customized amount is performed. More specifically, since the remaining designed elements in the current image fail to include the second element (i.e., no other designed element with the same group identification code corresponding to the first element exists in the current image), the processing module 220 can dynamically update the total element amount, and dynamically update the customized amount as the total element amount changes.

In some embodiments, since the processing module 220 can determine the amount corresponding to each designed element from the image database 260 according to the element identification code corresponding to each designed element, the processing module 220 can sum up the amount corresponding to each designed element, so as to calculate the value of the total element amount. In some embodiments, the processing module 220 can sum up the merchandise amount and the total element amount, so as to calculate the customized amount. Continuously, the processing module 220 can further replace the current total element amount with the new total element amount, and replace the current customized amount of with the new customized amount, so as to dynamically update the total element amount and the customized amount.

Thus, the method shown in FIG. 12 can not only generate the customized virtual image more effectively, but can also provide the customized amount corresponding to the displayed result in real time in response to the edit operations of the user, so that the user can grasp the value of the updated customized amount in real time. In addition, the method shown in FIG. 12 can also conditionally execute the update of the total element amount and/or the customized amount (i.e., determining whether to execute the step of updating the total element amount and/or the customized amount by executing the step of judgment), thereby reducing the number of operations required by the processing module 220.

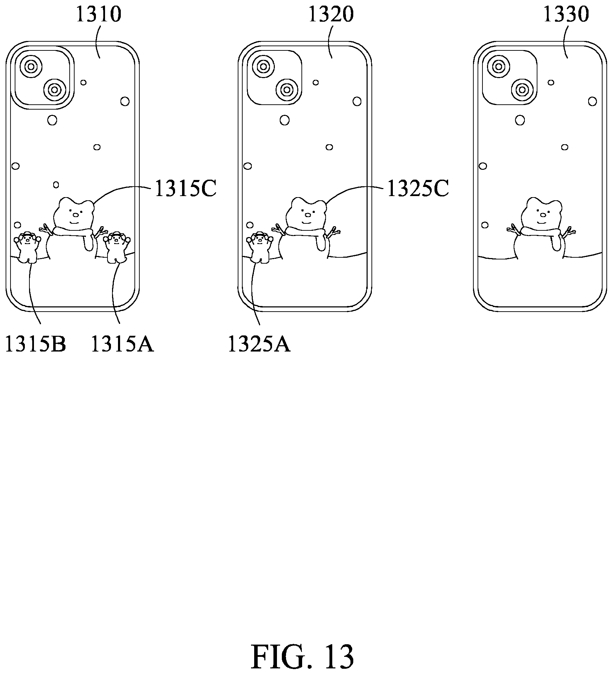

Referring to FIG. 13, FIG. 13 is a schematic view illustrating dynamically updating the total element amount and dynamically updating the customized amount with the change of the total element amount according to an embodiment of the present disclosure.

After the step S330 is executed, the processing module 220 can overlappingly display the designed image 1310 on the virtual merchandise image. After step S340 is executed, the processing module 220 may receive an instruction associated with an editing operation (i.e., deleting a designed element), wherein the editing operation is decided by the user. After step S1210 is executed, the processing module 220 can delete the first element 1315A in the designed image 1310, so as to generate a first customized virtual image 1320. Continuously, the processing module 220 may judge whether the remaining designed elements in the current image (i.e., the designed image 1310) include a second element by performing step S1220. Since the remaining designed elements in the current image (i.e., the designed image 1310) include a second element 1315B and a third element 1315C, the processing module 220 may continue to execute step S1230, that is, the value of the total element amount and the value of the customized amount keep unchanged. Among them, the third element 1315C is a different designed element from the sticker group to which the first element 1315A belongs (i.e., the group identification code corresponding to the third element 1315C is the same as the group identification code corresponding to the first element 1315A).

After step S340 is executed again, the processing module 220 may receive an instruction associated with an editing operation (i.e., deleting a designed element) again, wherein the edit operation is decided by the user. After the step S1210 is executed again, the processing module 220 may delete the first element 1325A in the first customized virtual image 1320, so as to generate a second customized virtual image 1330. Continuously, the processing module 220 may decide whether the remaining designed elements in the current image (i.e., the first customized virtual image 1320) include a second element by executing step S1220 again. Since the remaining designed elements in the current image (i.e., the first customized virtual image 1320) only include the third element 1325C and not the second element, the processing module 220 can continue to execute step S1240, that is, the amount corresponding to the first element 1325A is subtracted from the current total element amount, so as to calculate the new total element amount. In addition, the processing module 220 can further sum up the new total element amount and the merchandise amount, so as to calculate the new customized amount. Continuously, the processing module 220 can further replace the current total element amount with the new total element amount, and replace the current customized amount with the new customized amount, so as to dynamically update the total element amount and the customized amount.

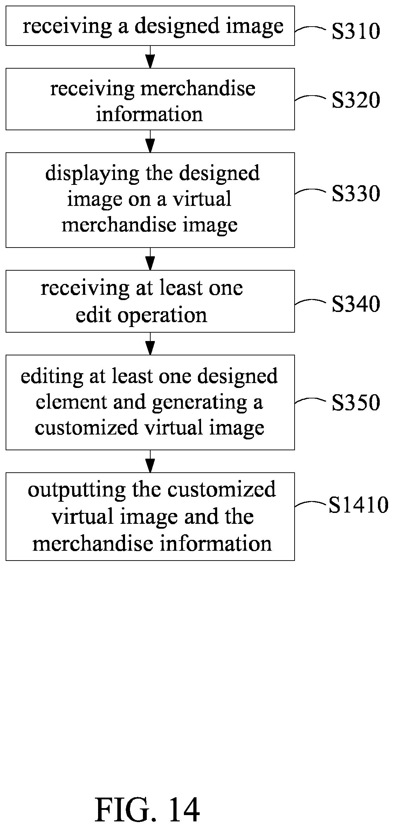

Referring to FIG. 14, FIG. 14 is a flowchart illustrating the method for customizing the appearance of the merchandise according to an embodiment of the present disclosure. The method shown in FIG. 14 can be executed by the processing module 220 as shown in FIG. 2, thereby customizing a customized choice result selected by a user, wherein the customized choice result may include a designed image and merchandise information.

The method shown in FIG. 14 may include steps S310, S320, S330, S340, S350 and S1410, wherein steps S310, S320, S330, S340, and S350 may be substantially the same as the steps shown in FIG. 3. That is, the method shown in FIG. 14 may include steps S310, S320, S330, S340, and S350 as shown in FIG. 3, and further include step S1410.

In step S1410, outputting the customized virtual image and the merchandise information is performed. More specifically, the processing module 220 can transmit a customized virtual image and merchandise information to an image output device 310 by an output module 240, so that the customized virtual image can be physically output on a physical object corresponding to the merchandise information by the image output device 310. In some embodiments, step S1410 may be executed successively after step S350.

In some embodiments, the image output device 310 may be a device that can physically output a virtual image on a physical object, and it may be a printing apparatus applied in such as garment printing, automobile paint printing, mobile phone case printing or sticker printing, but is not limited thereto.

Thus, the method shown in FIG. 14 can not only generate the customized virtual image more effectively, but can also provide manufacturers to manufacture specific products with the appearance of the merchandise that is preferred by the user according to the customized virtual image and merchandise change information, so that the user can obtain an actual object that is the same as the displayed result. In addition, the customized virtual image can be more widely used in various physical output requirements such as garment printing, automobile paint printing, mobile phone case printing or stickers by the image output device 310.

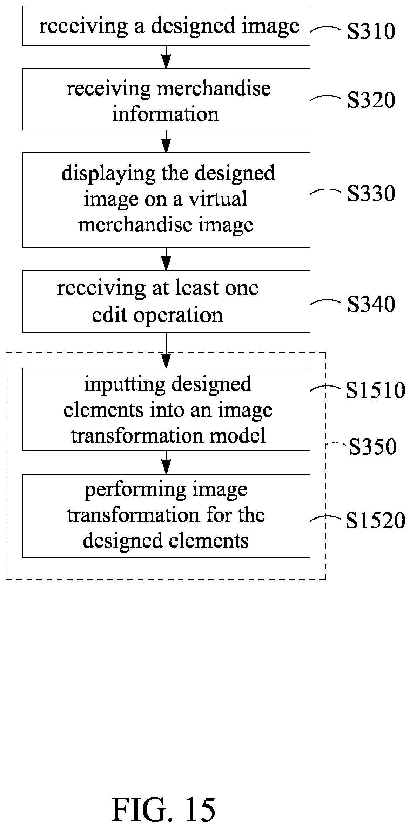

Referring to FIG. 15, FIG. 15 is a flowchart illustrating the method for customizing the appearance of the merchandise according to an embodiment of the present disclosure. The method shown in FIG. 15 can be executed by the processing module 220 as shown in FIG. 2, thereby customizing a customized choice result selected by a user, wherein the customized choice result may include a designed image and merchandise information.

The method shown in FIG. 15 may include steps S310, S320, S330, S340, S350, S1510 and S1520, wherein steps S310, S320, S330, S340, and S350 may be substantially the same as the steps shown in FIG. 3, and step 350 can be completed by executing steps S1510 and S1520.

In step S1510, inputting designed elements into an image transformation model 280 is performed. More specifically, the processing module 220 may input one or more designed elements in the current image into an image transformation model 280 after receiving instructions associated with transforming designed elements. In some embodiments, the image transformation model 280 may be an algorithm capable of performing image transformation for an image that is known to a person having ordinary knowledge in the art to which the present disclosure belongs, such as AdaAttN or DFR, but is not limited thereto.

In step S1520, image transformation for the designed elements is performed. More specifically, one or more of the input designed elements can be transformed separately by an image transformation model 280 such as AdaAttN, thereby generating and outputting the designed elements with specific stylistic features. Thus, the processing module 220 will generate a customized virtual image by executing step S1520. In some embodiments, step S1520 may be executed successively after step S1510.

Thus, the method shown in FIG. 15 can not only generate the customized virtual image more effectively, but can also perform the image transformation for the designed elements in response to the needs of the user, so that the user can generate more diverse customized virtual images.

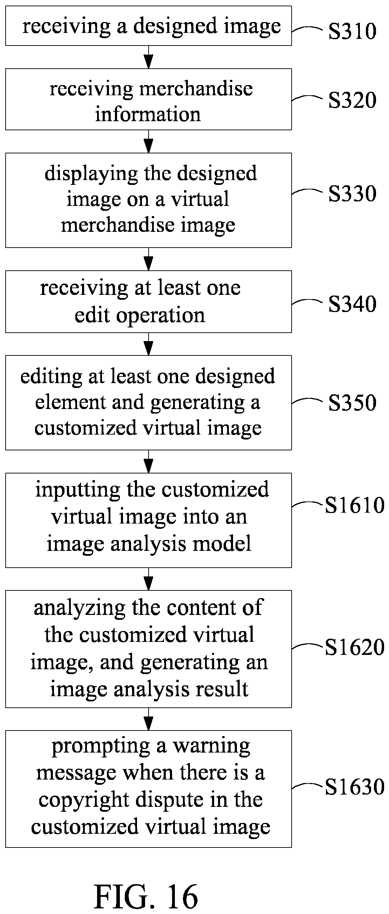

Referring to FIG. 16, FIG. 16 is a flowchart illustrating the method for customizing the appearance of the merchandise according to an embodiment of the present disclosure. The method shown in FIG. 16 can be executed by the processing module 220 as shown in FIG. 2, thereby customizing a customized choice result selected by a user, wherein the customized choice result may include a designed image and merchandise information.

The method shown in FIG. 16 may include steps S310, S320, S330, S340, S350, S1610, S1620 and S1630, wherein steps S310, S320, S330, S340, and S350 may be substantially the same as the steps shown in FIG. 3. That is, the method shown in FIG. 16 may include steps S310, S320, S330, S340, and S350 as shown in FIG. 3, and further include steps S1610, S1620 and S1630.

In step 51610, inputting the customized virtual image into an image analysis model 290. More specifically, the processing module 220 can input the customized virtual image into an image analysis model 290 after receiving a request of completing editing. In some embodiments, step S1610 may be executed successively after step S350. In some embodiments, the image analysis model 290 may be an algorithm capable of analyzing the content of the image that is known to a person having ordinary knowledge in the art to which the present disclosure belongs, such as the Google Vision API, but is not limited thereto.

In step S1620, the content of the customized virtual image is analyzed, and an image analysis result is generated. More specifically, the content of the input customized virtual image can be analyzed by an image analysis model 290 such as the Google Vision API, thereby generating and outputting an image analysis result after the image analysis is completed. Thus, the processing module 220 can determine whether there is a copyright dispute over the customized virtual image according to the result of the image analysis generated by executing step S1620. In some embodiments, step S 1620 may be executed successively after step S1610.

When the image analysis result indicates that there is a copyright dispute in the content of the customized virtual image, the processing module 220 will continue to execute step S1630; conversely, when the image analysis result fails to indicate that there is a copyright dispute in the content of the customized virtual image, the processing module 220 may output the customized virtual image after receiving a request of determining output.

In step S1630, prompting a warning message when there is a copyright dispute in the customized virtual image. More specifically, when the image analysis result indicates that there is a copyright dispute in the content of the customized virtual image, the processing module 220 can prompt the user with a warning message by the display module 250. In some embodiments, the processing module 220 may prompt a warning message by creating a pop-up window, wherein the pop-up window includes a text box and/or a pattern associated with the warning.

Thus, the method shown in FIG. 16 can not only generate the customized virtual images more effectively, but can also check on the copyright dispute of the generated customized virtual image, so as to generate less controversial customized virtual images, so that the user can generate customized virtual images with more peace of mind.

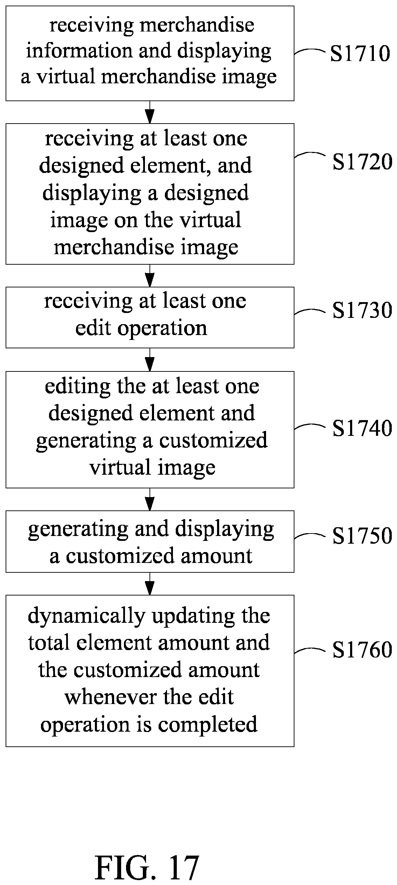

Referring to FIG. 17, FIG. 17 is a flowchart illustrating the method for customizing the appearance of the merchandise according to an embodiment of the present disclosure. The method shown in FIG. 17 can be executed by the processing module 220 as shown in FIG. 2, thereby customizing a customized choice result selected by a user, wherein the customized choice result may include merchandise information and designed elements. The method shown in FIG. 17 may include steps S1710, S1720, S1730, S1740, S1750 and S1760.

In step S1710, merchandise information is received and a virtual merchandise image is displayed. More specifically, after the user selects specific merchandise information among various merchandise information for customization, the processing module 220 can receive the merchandise information according to the customized choice result selected by the user. For example, the merchandise information received may be a phone case applied to a smartphone, a phone holder, a headphone case, an AirTag case, a tablet case, or a water bottle. In some embodiments, the merchandise information received may also be information about other physical objects, especially physical objects (such as clothes, mugs, or canvas bags) that consumers tend to pay special attention to the appearance of the merchandise.

Continuously, the processing module 220 may determine the virtual merchandise image corresponding to the merchandise information from the image database 260 according to the merchandise information, and may display the virtual merchandise image corresponding to the merchandise information by the display module 250. Since the content of the virtual merchandise image is defined according to the physical object, the virtual merchandise image can realistically display a visual image having the same features as the physical object, and the above-described having the same features as the physical object may mean that it has the same appearance, component configuration, size, and color as the physical object.

In step S1720, at least one designed element is received, and a designed image is displayed on the virtual merchandise image. More specifically, after the user selects the preferred designed element among various designed elements for customization, the processing module 220 can receive one or more the designed element according to the customized choice result selected by the user. In some embodiments, step S1720 may be executed successively after step S1710. In some embodiments, various designed elements may be stored in the image database 260, and the processing module 220 may display various designed elements stored in the image database 260 by the display unit 222. In some embodiments, various designed elements may be displayed on the screen in a thumbnail arrangement, so that the user can more conveniently select preferred designed images. In some embodiments, since various designed elements can be classified according to the creator, the various designed elements can be stored together in the image database 260 with their corresponding group identification codes, so that the processing module 220 arranges the designed elements of the same group identification code and displays them together, so that the user can more conveniently select the preferred designed images.

In step S1730, receiving at least one edit operation is performed. More specifically, the processing module 220 can receive an instruction associated with the edit operation, wherein the edit operation is decided by the user. In some embodiments, the edit operation may be used to edit one or more designed element. In some embodiments, the edit operation may also be used to edit text and/or images (e.g., photographic files) provided by the user. In some embodiments, step S1730 may be executed successively after step S1720.

In step S1740, the at least one designed element is edited and a customized virtual image is generated. More specifically, after receiving the instruction associated with the edit operation, the processing module 220 can perform corresponding editing according to the received instruction, and generate a customized virtual image according to the current image content after completing the editing. In some embodiments, step S 1740 may be executed successively after step S1730. The editing made via step S1740 may include:
- Newly adding a sticker image as a designed element: adding a sticker image selected by the user to the current image, and using the sticker image as a designed element.
- Newly adding a text box as a designed element: adding a text box compiled by the user to the current image, and using the text box as a designed element.
- Newly adding an image provided by the user as a designed element: adding an image (e.g., a photographic file) provided by the user to the current image, and using the image as a designed element.
- Locking a designed element: setting one or more designed elements in the current image to a locked state, thereby temporarily fixing the size, position and/or rotation angle of the designed elements.
- Hiding a designed element: setting one or more designed elements in the current image to a hidden state, thereby temporarily not displaying the designed elements.
- Displaying a designed element: setting one or more designed elements in the current image to a displaying state, thereby temporarily displaying the designed elements.
- Zooming in or zooming out a designed element: adjusting the size of one or more designed elements in the current image. In some embodiments, the zooming in or zooming out the designed element may be edited in a proportional manner. In some embodiments, when the designed element is zoomed in or zoomed out through the editing unit 223, the display unit 222 can emphasize the area where the designed element can be displayed during zooming in or zooming out the designed element, so that the user can more clearly confirm whether the designed element exceeds the area that can be displayed during zooming in or zooming out. In some embodiments, areas where the designed elements can be displayed can be emphasized by using more prominent color blocks (e.g., fluorescent yellow). In other embodiments, areas where the designed elements can be displayed may be emphasized by using more prominent border lines (e.g., dark bold lines).
- Moving a designed element: adjusting the position of one or more designed elements in the current image. In some embodiments, the moving the designed element may be edited by means of mouse dragging. In some embodiments, when the designed element is moved by the editing unit 223, the display unit 222 may emphasize the area where the designed element can be displayed during moving the designed element, so that the user can more clearly confirm whether the designed element exceeds the area that can be displayed during the moving period.
- Rotating a designed element: adjusting the rotation angle of one or more designed elements in the current image. In some embodiments, the rotating the designed element may be edited by means of mouse dragging. In some embodiments, when the designed element is rotated by the editing unit 223, the display unit 222 may emphasize the area where the designed element can be displayed during rotating the designed element, so that the user can more clearly confirm whether the designed element exceeds the area that can be displayed during the rotation period.
- Setting layer order of designed elements: setting the layer order of one or more designed elements in the current image. In some embodiments, the layer order corresponding to each designed element can be set in the form of a cascading list. For example, when a cascading list is a first designed element, a second designed element, and a third designed element from top to bottom, it means that the layer order of the first designed element is set on the second and third designed elements, and the layer order of the second designed element is set on the third designed element. At this time, the display unit 222 can display the first designed element at the outmost surface layer, the third designed element at the lowest layer, and the second designed element in the middle layer between the first designed element and the third designed element. If there is an area of partial overlap between the first, second, and third designed elements, the second designed element will display overlappingly on the third designed element, and the first designed element will display overlappingly on the second and third designed elements. In some embodiments, after a new designed element is added to the current image, the layer order corresponding to the designed element may be initially set to the top of the cascading list, so as to display the designed element at the outmost surface layer. In some embodiments, the user can adjust the order of each designed element in a cascading list by means of mouse dragging, so as to change the layer order corresponding to each designed element.
- Transforming designed elements: performing image transformation for one or more designed elements in the current image. In some embodiments, the designed element may be input into the image transformation model 280, so as to perform image transformation for the designed element by the image transformation model 280. For example, designed elements can be transformed into the designed elements with specific stylistic features by the image transformation model 280 such as AdaAttN.
- Deleting designed elements: deleting one or more designed elements in the current image.

In step S1750, generating and displaying a customized amount is performed. More specifically, the processing module 220 may generate a customized amount according to the merchandise amount and the total element amount, and the generated customized amount may be displayed by the display module 250. In some embodiments, the processing module 220 may sum up the merchandise amount and the total element amount, so as to calculate the customized amount. That is to say, after the processing module 220 determines the merchandise amount and calculates the total element amount, the processing module 220 may further generate a customized amount. In some embodiments, step S1750 may be executed successively after step S1740. In some embodiments, the processing module 220 may further display the determined merchandise amount and/or the calculated total element amount by the display module 250.

In some embodiments, since the processing module 220 can determine the amount corresponding to the merchandise information from the merchandise database 270 according to the merchandise identification code corresponding to the merchandise information, the processing module 220 can decide the value of the merchandise amount according to the merchandise information.

In some embodiments, the total element amount may be decided according to the content of the customized virtual image. That is, the processing module 220 may calculate the total element amount according to the designed elements used in the customized virtual image. In some embodiments, since the processing module 220 can determine the amount corresponding to each designed element from the image database 260 according to the element identification code corresponding to each designed element, the processing module 220 can sum up the amount corresponding to each designed element, so as to calculate the value of the total element amount.

In step S1760, the total element amount and the customized amount are dynamically updated whenever the edit operation is completed. More specifically, after step S1740 is completed, the processing module 220 can dynamically update the total element amount, and dynamically update the customized amount as the total element amount changes.

In some embodiments, since the processing module 220 can determine the amount corresponding to each designed element from the image database 260 according to the element identification code corresponding to each designed element, after step S1740 is completed, the processing module 220 can sum up the amount corresponding to each designed element in the new customized virtual image generated by step S 1740, so as to calculate the value of the new total element amount. In some embodiments, the processing module 220 can sum up the merchandise amount and the new total element amount, so as to calculate the new customized amount. Continuously, the processing module 220 can further replace the current total element amount with the new total element amount, and replace the current customized amount of with the new customized amount, so as to dynamically update the total element amount and the customized amount.

In some embodiments, step S1760 can be completed by executing steps S1110, S1120 and S1130 as shown in FIG. 11, so as to conditionally perform an update of the total element amount and/or the customized amount (i.e., determining whether to execute the step of updating the total element amount and/or the customized amount by executing the step of judgment), thereby reducing the number of operations required by the processing module 220.

In some embodiments, step S1760 can be completed by executing steps S1220, S1230 and S1240 as shown in FIG. 12, so as to conditionally perform an update of the total element amount and/or the customized amount (i.e., determining whether to execute the step of updating the total element amount and/or the customized amount by executing the step of judgment), thereby reducing the number of operations required by the processing module 220.

Thus, the method shown in FIG. 17 can solve the shortcomings of the prior art, that is, the existing customized service platform can only provide the purchase of customized merchandise at a fixed price, and cannot decide the corresponding price in response to the different customized displayed results generated by the user. In other words, the method shown in FIG. 17 not only generates a customized virtual image, but can also provide a customized amount corresponding to the customized displayed result in real time in response to the edit operation of the user, so that the user can grasp the value of the updated customized amount in real time (that is, the value of the customized amount corresponding to each customized virtual image during the customization period).

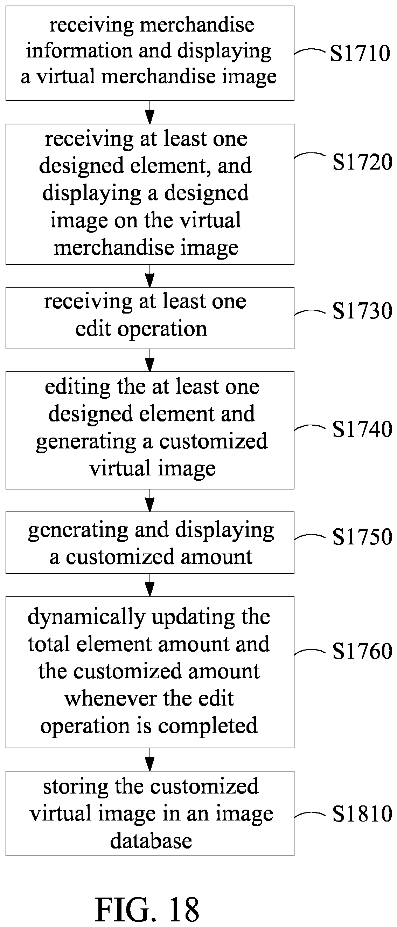

Referring to FIG. 18, FIG. 18 is a flowchart illustrating the method for customizing the appearance of the merchandise according to an embodiment of the present disclosure. The method shown in FIG. 18 can be executed by the processing module 220 as shown in FIG. 2, thereby customizing a customized choice result selected by a user, wherein the customized choice result may include merchandise information and designed elements.

The method shown in FIG. 18 may include steps S1710, S1720, S1730, S1740, S1750, S1760 and S1810, wherein steps S1710, S1720, S1730, S1740, S1750 and S1760 may be substantially the same as the steps shown in FIG. 17. That is, the method shown in FIG. 18 may include steps S1710, S1720, S1730, S1740, S1750 and S1760 as shown in FIG. 17, and further include step S1810.

In step S1810, the customized virtual image is stored in an image database 260. More specifically, after receiving a request of storing a designed image, the processing module 220 may store a customized virtual image generated by step S1740 in an image database 260, and the customized virtual image is set to be a designed image that can be edited, wherein the designed image refers to an image that can be selected by the user and the designed element in which it can be edited. In some embodiments, the processing module 220 can decide whether to store the customized virtual image to the image database 260 and whether to set the customized virtual image to a designed image that can be edited according to the review result received. In some embodiments, the designed image may be a customized choice result selected by the user in the method for customizing the appearance of the merchandise as shown in FIG. 3.

Thus, the method shown in FIG. 18 can not only provide the customized amount corresponding to the customized displayed result in real time in response to the edit operation of the user, but can also set the customized virtual image generated by the user into the designed image, so as to enrich the content of the image database 260, and the user can select the preferred designed image from more diverse designed images for customization, so that the user can more effectively use the designed image to generate the customized virtual image.

In some embodiments, the customized choice result in the method for customizing the appearance of the merchandise as shown in FIG. 17 may further include merchandise change information, and the method for customizing the appearance of the merchandise as shown in FIG. 17 may further include steps S510B and S520B as shown in FIG. 5B, so that the user can directly overlappingly display the customized virtual image that is preferred by the user on the virtual merchandise change image without re-operation. At this time, the user can decide whether the designed elements in the customized virtual image need to be further edited according to the displayed result, thereby more effectively generating a customized virtual image suitable for the merchandise change information according to the result of the previous customized virtual image. In some embodiments, step S510B may be executed successively after step S1740.

In some embodiments, the customized choice result in the method for customizing the appearance of the merchandise as shown in FIG. 17 may further include merchandise change information, and the method for customizing the appearance of the merchandise as shown in FIG. 17 may further include steps S510B and S520B as shown in FIG. 5B and step S620 as shown in FIG. 6B, so as to provide the customized amount corresponding to the displayed result in real time in response to the customized choice result of the user, so that the user can grasp the value of the updated customized amount in real time. In some embodiments, step S620 may be executed successively after step S510B.

In some embodiments, the customized choice result in the method for customizing the appearance of the merchandise as shown in FIG. 17 may further include merchandise change information, and the method for customizing the appearance of the merchandise as shown in FIG. 17 may further include steps S510B and S520B as shown in FIG. 5B and step S810 as shown in FIG. 8, so as to provide manufacturers to manufacture specific products with the appearance of the merchandise that is preferred by the user according to the customized virtual image and merchandise change information, so that the user can obtain an actual object that is the same as the displayed result. In some embodiments, step S810 may be executed successively after step S520B.

In some embodiments, the method for customizing the appearance of the merchandise as shown in FIG. 17 may further include step S1410 as shown in FIG. 14, so as to provide manufacturers to manufacture specific products with the appearance of the merchandise that is preferred by the user according to the customized virtual image and merchandise change information, so that the user can obtain an actual object that is the same as the displayed result. In some embodiments, step S1410 may be executed successively after step S1740.

In some embodiments, the method for customizing the appearance of the merchandise as shown in FIG. 17 may further include steps S1510 and S1520 as shown in FIG. 15, so as to perform the image transformation for the designed elements in response to the needs of the user, so that the user can generate more diverse customized virtual images. In some embodiments, step S 1740 may be completed by executing steps S 1010 and S 1020.

In some embodiments, the method for customizing the appearance of the merchandise as shown in FIG. 17 may further include steps S1610, S1620 and S1630 as shown in FIG. 16, so as to check on the copyright dispute of the generated customized virtual image, so as to generate less controversial customized virtual images, so that the user can generate customized virtual images with more peace of mind. In some embodiments, step S1610 may be executed successively after step S1740.

In some embodiments, the individual steps in the method for customizing the appearance of the merchandise described in the present disclosure may be further combined, replaced, repeatedly performed and/or modified, so as to generate new embodiments within the scope disclosed in the present disclosure.

In some embodiments, the individual steps of the method for customizing the appearance of the merchandise described in the present disclosure may be stored in a computer-readable recording medium that may be a non-transitory computer-readable recording medium such as a hard disk, optical disc, magnetic disk, flash drive, or a database accessible by a network, but is not limited thereto. After the computer-readable recording medium loads the computer program product stored in the computer-readable recording medium through the computing device, and executes the computer program product, it can realize any one of the methods for customizing the appearance of the merchandise described in the present disclosure.

In some embodiments, the computer program product for customizing the appearance of the merchandise described in the present disclosure may include individual steps of the method for customizing the appearance of the merchandise described in the present disclosure, so that the computing device can realize any one of the methods for customizing the appearance of the merchandise described in the present disclosure after loading the computer program product and executing the computer program product.

The present invention has been further described by the above embodiments and the attached drawings, but a person having ordinary knowledge in the art to which the invention belongs may still make many modifications and changes without violating the scope and spirit proposed in the claims of the present invention. Therefore, the protection scope of the present invention shall still be defined by the claims, and shall not be limited by the content disclosed in the specification.

## Claims

1. A method for customizing an appearance of a merchandise, suitable for being performed by a computing device (200) in order to customize a customized choice result selected by a user, wherein the customized choice result comprises a designed image (410, 1310) and merchandise information, the method comprising:
receiving the designed image (410, 1310), wherein the designed image (410, 1310) comprises at least one designed element (415, 415');
receiving the merchandise information;
overlappingly displaying the designed image (410, 1310) on a virtual merchandise image (420) corresponding to the merchandise information;
receiving at least one edit operation for the at least one designed element (415, 415') in the designed image (410, 1310); and
editing the at least one designed element (415, 415') in the designed image (410, 1310) according to the at least one edit operation, and then generating a customized virtual image (440, 450).

2. The method according to claim 1,
wherein the customized choice result further comprises merchandise change information, and
wherein the method further comprises:
receiving the merchandise change information; and
overlappingly displaying the designed image (410, 1310) or the customized virtual image (440, 450) on a virtual merchandise change image corresponding to the merchandise change information after receiving the merchandise change information.

3. The method according to claim 1,
wherein the customized choice result further comprises a sticker image, and
wherein editing the at least one designed element (415, 415') in the designed image (410, 1310) according to the at least one edit operation comprises:
receiving the sticker image; and
using the sticker image as the at least one designed element (415, 415') to be added in the designed image (410, 1310).

4. The method according to claim 1, wherein editing the at least one designed element (415, 415') in the designed image (410, 1310) according to the at least one edit operation comprises deleting a first element (1315A, 1325A) in the at least one designed element (415, 415').

5. The method according to claim 1, wherein editing the at least one designed element (415, 415') in the designed image (410, 1310) according to the at least one edit operation comprises:
inputting the at least one designed element (415, 415') to an image transformation model (280); and
performing image transformation for the at least one designed element (415, 415') by the image transformation model (280).

6. The method according to claim 1, further comprising:
inputting the customized virtual image (440, 450) into an image analysis model (290);
analyzing the content of the customized virtual image (440, 450) by the image analysis model (290), and generating an image analysis result; and
prompting a warning message when the image analysis result indicates that there is a copyright dispute in the content of the customized virtual image (440, 450),
wherein the image analysis model (290) is Google Vision API.

7. The method according to claim 1, wherein the designed image (410, 1310) is a combined image and wherein the number of the at least one designed element (415, 415') is plural.

8. A method for customizing an appearance of a merchandise, suitable for being performed by a computing device (200) in order to customize a customized choice result selected by a user, wherein the customized choice result comprises at least one designed element (415, 415') and merchandise information, the method comprising:
receiving the merchandise information, and displaying a virtual merchandise image (420) corresponding to the merchandise information;
receiving the at least one designed element (415, 415'), and overlappingly displaying the at least one designed element (415, 415') on the virtual merchandise image (420);
receiving at least one edit operation performed for the at least one designed element (415, 415');
editing the at least one designed element (415, 415') according to the at least one edit operation, and generating a customized virtual image (440, 450);
generating a customized amount according to a merchandise amount and a total element amount, and displaying the customized amount; and
dynamically updating the total element amount whenever the at least one edit operation is completed, and dynamically updating the customized amount as the total element amount changes.
wherein the merchandise amount is decided by the merchandise information, and
wherein the total element amount is decided by the content of the customized virtual image (440, 450).

9. The method according to claim 8, wherein dynamically updating the total element amount, and dynamically updating the customized amount as the total element amount changes comprises:
judging whether a sticker group to which the sticker image belongs is a new group choice result whenever the at least one edit operation is adding a sticker image, and the sticker image is used as the at least one designed element (415, 415');
maintaining the total element amount and the customized amount when the sticker group is not the new group choice result; and
dynamically updating the total element amount when the sticker group is the new group choice result, and dynamically updating the customized amount as the total element amount changes.

10. The method according to claim 8, wherein dynamically updating the total element amount, and dynamically updating the customized amount as the total element amount changes comprises:
judging whether the at least one designed element (415, 415') comprises a second element (1315B) whenever the at least one edit operation is deleting a first element (1315A, 1325A) in the at least one designed element (415, 415');
dynamically updating the total element amount when the at least one designed element (415, 415') fails to comprise the second element (1315B), and dynamically updating the customized amount as the total element amount changes; and
maintaining the total element amount and the customized amount when the at least one designed element (415, 415') comprises the second element (1315B),
wherein the second element (1315B) is another designed element (415, 415') that is the same as a sticker group to which the first element (1315A, 1325A) belongs.

11. The method according to claim 8, further comprising:
storing the customized virtual image (440, 450) in an image database (260), and the customized virtual image (440, 450) is set to be a designed image (410, 1310) that can be edited.

12. The method according to claim 8,
wherein the customized choice result further comprises merchandise change information, and
wherein the method further comprises:
receiving the merchandise change information;
overlappingly displaying the customized virtual image (440, 450) on a virtual merchandise change image corresponding to the merchandise change information after receiving the merchandise change information; and
dynamically updating the merchandise amount after receiving the merchandise change information, and dynamically updating the customized amount as the merchandise amount changes.

13. A computing device (200) for customizing an appearance of a merchandise, comprising:
a storage module (230), configured to store a computer program product; and
a processing module (220), configured to couple with the storage module (230),
wherein after the processing module (220) loads and executes the computer program product, the processing module (220) is capable of performing the method for customizing the appearance of the merchandise as described in any one of the claims 1 to 12.

14. A non-transitory computer-readable recording medium for customizing an appearance of a merchandise, after a computing device (200) loads a computer program product stored in the non-transitory computer-readable recording medium and executes the computer program product, the computing device (200) is capable of performing the method for customizing the appearance of the merchandise as described in any one of the claims 1 to 12.

15. A computer program product for customizing an appearance of a merchandise, capable of completing the method for customizing the appearance of the merchandise as described in any one of the claims 1 to 12 after a computer device (200) loads and executes the computer program product.
